(19) Europäisches Patentamt
European Patent Office
Office européen des brevets

(11) **EP 4 563 605 A1**

(12) # EUROPEAN PATENT APPLICATION
published in accordance with Art. 153(4) EPC

(43) Date of publication:
**04.06.2025 Bulletin 2025/23**

(21) Application number: **23831674.9**

(22) Date of filing: **30.03.2023**

(51) International Patent Classification (IPC):
***C08F 212/08*** *(2006.01)* ***C08F 212/14*** *(2006.01)*
***C08G 61/02*** *(2006.01)* ***C08J 5/22*** *(2006.01)*
***H01M 8/103*** *(2016.01)* ***H01M 8/1039*** *(2016.01)*
***C08F 236/10*** *(2006.01)*

(52) Cooperative Patent Classification (CPC):
**C08F 212/08; C08F 212/14; C08F 236/10; C08G 61/02; C08J 5/22; H01M 8/103; H01M 8/1039;** Y02E 60/50

(86) International application number:
**PCT/KR2023/004233**

(87) International publication number:
**WO 2024/005308 (04.01.2024 Gazette 2024/01)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **28.06.2022 KR 20220079130**
**28.03.2023 KR 20230040300**

(71) Applicant: **Hanwha Solutions Corporation**
**Jung-gu**
**Seoul 04541 (KR)**

(72) Inventors:
- **KIM, Tae-Hyun**
  **Incheon 22003 (KR)**
- **MIN, Kyungwhan**
  **Incheon 21998 (KR)**
- **JEONG, Insu**
  **Incheon 22008 (KR)**
- **LEE, Yerim**
  **Incheon 22100 (KR)**
- **CHOI, Jiyong**
  **Incheon 22351 (KR)**

(74) Representative: **Berggren Oy**
**P.O. Box 16**
**Eteläinen Rautatiekatu 10A**
**00101 Helsinki (FI)**

(54) **CROSSLINKED COPOLYMER, POLYMER MEMBRANE COMPRISING SAME, AND ANION EXCHANGE MEMBRANE COMPRISING SAME POLYMER MEMBRANE**

(57) The present disclosure relates to a novel crosslinked copolymer that can be preferably used as an anion exchange membrane (AEM) material for fuel cells because of its excellent mechanical properties, excellent alkaline stability, and high ionic conductivity and hydration.

【FIG. 1】

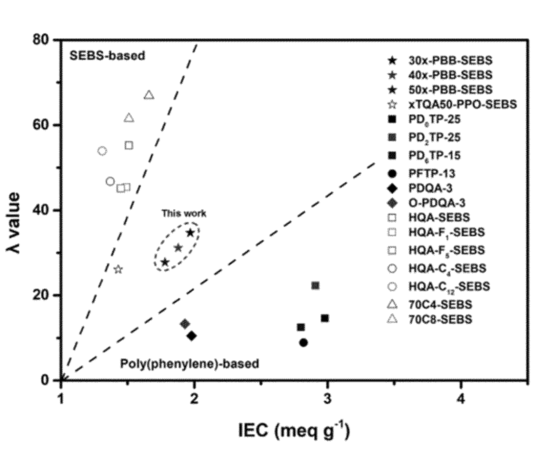


EP 4 563 605 A1

## Description

[TECHNICAL FIELD]

### Cross-reference to Related Applications

This application claims the benefit of Korean Patent Application No. 10-2022-0079130 filed on June 28, 2022 and Korean Patent Application No. 10-2023-0040300 filed on March 28, 2023 with the Korean Intellectual Property Office, the disclosures of which are herein incorporated by reference in their entirety.

The present disclosure relates to a crosslinked copolymer, a polymer membrane including the same, and an anion exchange membrane including the polymer membrane.

[BACKGROUND OF ART]

Hydrogen fuel cells are gaining significant attention as an eco-friendly energy sources, because these cells release only water ($H_2O$) as a by-product during the production of electrical energy. Among various hydrogen fuel cells, anion exchange membrane fuel cells (AEMFCs) have been the center of recent attention as a technology to replace proton exchange membrane fuel cells (PEMFCs), because they can use non-noble metal catalysts.

AEMFCs convert chemical energy into electrical energy by enabling the conduction of hydroxide ions ($OH^-$) through anion exchange polymer electrolyte membranes. Therefore, it is necessary to develop anion exchange polymer electrolyte membranes with excellent ionic conductivity, also called anion exchange membranes (AEMs), in order to develop AEMFCs with excellent performance. However, AEMFCs generate electricity by conducting $OH^-$ ions, so that the pH tends to increase during cell operation, resulting in an alkaline environment.

Generally, AEMs consist of polymer backbones and ion-conducting head groups, and the abundance of hydroxide ions in an alkaline environment provides opportunities for nucleophilic attacks on the polymer backbone and ionic ion-conducting groups, leading to decrement in ionic conductivity and mechanical properties of AEMs. Therefore, it is necessary to develop AEMs with excellent chemical stability in order to prevent such performance degradation. In other words, it is essential to develop AEMs with excellent ionic conductivity and chemical stability in order to develop AEMFCs with excellent performance.

In the case of ion-conducting polymers (ionomers) such as AEMs, ionic conductivity is mainly affected by the type of ion-conducting groups and ion exchange capacity (IEC). In addition, effective formation of ion clusters and ion conducting channels according to the morphology of the corresponding membrane also affects the ionic conductivity.

The alkaline stability of AEMs is affected by a combination of several factors including polymer backbones, ion-conducting groups, and the hydration number. Accordingly, improving the overall performance of AEMs (i.e., to have high conductivity and alkaline stability) requires a comprehensive understanding of their properties: not only the types of ion-conducting groups and polymer backbones but also the morphology of the corresponding membrane determined by their molecular structure and the hydration number. To this end, many studies have been conducted on the ion-conducting groups and polymer backbones of AEMs over the past decade.

First, with regard to the ion-conducting groups and the polymer backbones in terms of the structure of AEMs, studies on quaternary ammonium such as benzyl ammonium and alkyl ammonium and cyclic ammonium such as imidazolium, piperidinium, and spiro ammonium have been actively conducted. In particular, piperidinium has garnered significant recent attention due to its moderate ionic conductivity and excellent chemical stability. Poly(aryl ether sulfone) (PES), poly(aryl ether ketone) (PAEK), poly(phenylene oxide) (PPO), spirobisindane, polyphenylene (PP), styrene-ethylenebutylene-styrene (SEBS), and the like have been actively studied as a polymer backbone constituting AEMs. In particular, the polyphenylene polymer backbone with an aryl ether-free structure has recently been studied a lot due to its excellent chemical stability and mechanical properties.

In addition to the performance improvement in AEMs due to the structure, various approaches have been proposed such as conductivity improvement due to the introduction of multication, and stability maximization by controlling the morphology of the membrane due to the introduction of a block-, graft-, or partially fluorinated-polymer backbone or side chain along with crosslinking.

Accordingly, AEM materials with excellent chemical stability even under high temperature and high pH conditions along with AEM materials having very high cell performances almost equivalent to PEMFCs (proton exchange membrane fuel cell) are being developed by controlling the structure of the ion-conducting groups and polymers and optimizing the morphology of the polymer membrane. Examples thereof include poly(aryl piperidinium) (PAP), poly(diphenylethane-co-terphenyl piperidinium) (PDTP), polycarbazole, poly(aryl-co-terphenyl piperidinium), and the like.

These polyphenylene-based AEMs are characterized by a relatively low water uptake (WU), that is, a low hydration number, than expected for their IEC. In the ion conduction mechanism of AEMs, water generally serves as a conduction medium for $OH^-$, so high water uptake (WU) must be accompanied for high ion conduction characteristics of

AEMs. In addition, when the membrane has a high hydration number, it also has the advantage of ultimately increasing chemical stability of AEMs by limiting the nucleophilic attack on the $OH^-$ conducting group. In addition, due to the strong $\pi$-$\pi$ interaction between phenyl groups included in the polymer backbone, polyphenylene-based AEMs have high stress and relatively low strain properties. Further, AEMs must not be damaged by gas flow or impact because they act as a separator that prevents fuel supplied to the anode and cathode from passing over to the opposite electrode. Therefore, in order to secure the performance and durability of AEMFCs, it is clear that high mechanical stability of AEMs, especially high stress property, is essential. However, in order to overcome the mechanical failure that may occur at the edge of the MEA active area in which mechanical stress was maximized during the operation of AEMPCs, high stress as well as high strain properties of AEMs are required.

Meanwhile, styrene-b-ethylene-co-butylene-b-styrene (SEBS)-based AEMs have different physical properties from polyphenylene-based AEMs, that is, a high hydration number and high strain. This is attributed to the aliphatic chain structure of SEBS. In addition, SEBS has a well-developed morphology with a block copolymer structure of styrene and 1,4-butadiene, so the AEMs have higher ionic conductivity and chemical stability than expected for their IEC. However, an excessively high water uptake may rather reduce the ion conduction characteristics of the membrane due to the so-called 'dilution effect' that excessively swells the AEMs and lowers the concentration of $OH^-$, a conducting ion. In addition, SEBS is vulnerable to membrane breakage and deformation due to its low tensile strength, making it unsuitable for high-temperature and humid AEMFC operating environments. Further, the limited solubility of SEBS limits the modification of SEBS, making it difficult to develop SEBS-based AEMs with better performance.

In order to overcome these limitations of SEBS, Korea Patent No. 10-2184530 proposed a copolymer (xTQA-PPO-SEBS) in which flexible SEBS and rigid PPO were crosslinked through triazole. This copolymer exhibited low WU and high deformability compared to previously known SEBS-based membranes, and exhibited high ionic conductivity and cell characteristics than expected for its IEC. However, the copolymer has a problem of low chemical stability against hydroxide ions due to the aryl ether-containing structure.

[PRIOR ART DOCUMENTS]

Patent Literature 1: Korean Patent Registration No. 10-2184530
Non-Patent Literature 1: Nat. Energy 4 (2019) 392-398
Non-Patent Literature 2: J. Power Sources 487 (2021), 229429
Non-Patent Literature 3: J. Mater. Chem. A. Mater. 9(2021) 327-337
Non-Patent Literature 4: Nat. Commun. 12 (2021) 2367
Non-Patent Literature 5: J. Membr. Sci. 621 (2021)
Non-Patent Literature 6: J. Membr. Sci. 642 (2022), 119966
Non-Patent Literature 7: J. Polym. Sci. 58 (2020) 2181-2196
Non-Patent Literature 8: Int. J. Hydrogen Energy 46 (2021) 36301-36313
Non-Patent Literature 9: J. Membr. Sci. 599 (2020), 117829
Non-Patent Literature 10: Int. J. Hydrogen Energy 45 (2020) 15658-15671
Non-Patent Literature 11: J. Membr. Sci. (2022), 120029
Non-Patent Literature 12: J. Mater. Chem. A. 7 (2019) 6883-6893
Non-Patent Literature 13: J. Membr. Sci. 638 (2021), 119685
Non-Patent Literature 14: Energy Environ. Sci. 13 (2020) 3633-3645
Non-Patent Literature 15: Int. J. Hydrogen Energy 46 (2021) 18524-18533
Non-Patent Literature 16: J. Membr. Sci. 647 (2022), 120341
Non-Patent Literature 17: Angew. Chem. 133 (2021) 7789-7797
Non-Patent Literature 18: Membranes 10 (2020) 1-16


[DETAILED DESCRIPTION OF THE INVENTION]

[Technical Problem]

The present disclosure relates to a novel crosslinked copolymer that can be preferably used as an anion exchange membrane (AEM) material for fuel cells because of its excellent mechanical properties, excellent alkaline stability, and high ionic conductivity and hydration.

[Technical Solution]

According to one embodiment of the present disclosure, there is provided a crosslinked copolymer including a first chain represented by the following Chemical Formula 1 and a second chain represented by the following Chemical Formula 2, wherein the first chain and the second chain are crosslinked with each other:

[Chemical Formula 1]

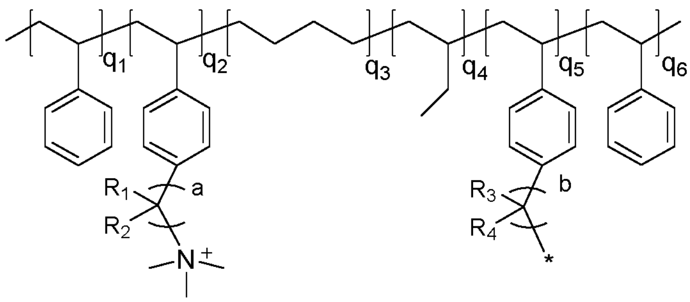

in Chemical Formula 1,

* is a bonding position with Chemical Formula 2,
a sum of $q_1$, $q_2$, $q_5$, and $q_6$ is an integer of 100 to 1,000,
a sum of $q_3$ and $q_4$ is an integer of 150 to 2,000,
a and b are each independently an integer of 3 to 10, and
$R_1$ to $R_4$ are each independently hydrogen or $-(CH_2)_p-CH_3$, wherein p is an integer of 0 to 5,

[Chemical Formula 2]

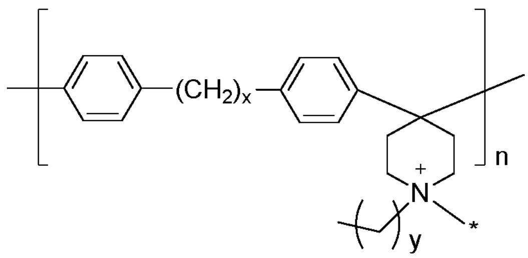

in Chemical Formula 2,

* is a bonding position with Chemical Formula 1,
x and y are each independently an integer of 0 to 10, and
n is an integer of 10 to 1000.

In addition, according to one embodiment of the present disclosure, there is provided a polymer membrane including the above-described crosslinked copolymer.

In addition, according to one embodiment of the present disclosure, there is provided a method for preparing a crosslinked copolymer including the steps of:

(a) preparing a polymer represented by the following Chemical Formula 1-1;
(b) preparing a polymer represented by the following Chemical Formula 2-1; and
(c) preparing a crosslinked copolymer by crosslinking the polymer represented by the following Chemical Formula 1-1 and the polymer represented by the following Chemical Formula 2-1:

[Chemical Formula 1-1]

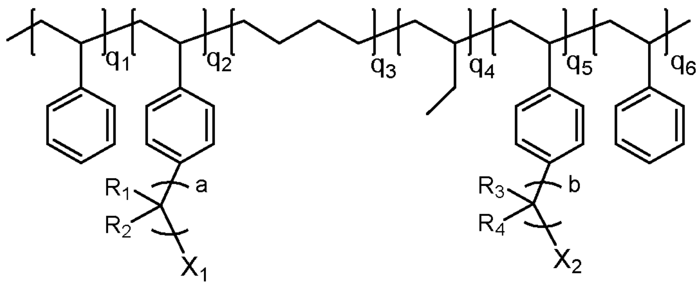

in Chemical Formula 1-1,

a sum of $q_1$, $q_2$, $q_5$, and $q_6$ is an integer of 100 to 1,000,
a sum of $q_3$ and $q_4$ is an integer of 150 to 2,000,
a and b are each independently an integer of 3 to 10, and
$R_1$ to $R_4$ are each independently hydrogen or $-(CH_2)_p-CH_3$, wherein p is an integer of 0 to 5,
$X_1$ and $X_2$ are each independently a halogen group,

[Chemical Formula 2-1]

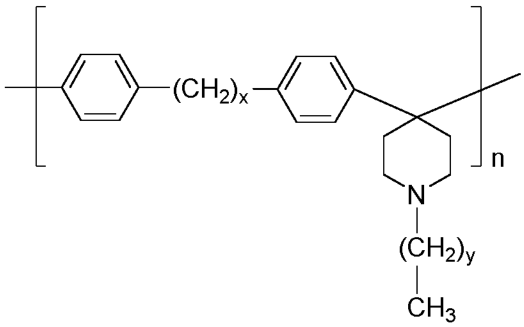

in Chemical Formula 2-1,

x and y are each independently an integer of 0 to 10, and
n is an integer of 10 to 1000.

[ADVANTAGEOUS EFFECTS]

The crosslinked copolymer of the present disclosure has excellent dimensional stability while having high water uptake (WU), and exhibit high ionic conductivity, hydration, and alkaline stability. In addition, the crosslinked copolymer has excellent mechanical properties such as tensile strength and elongation properties.
As described above, the crosslinked copolymer of the present disclosure has excellent electrochemical properties and mechanical properties, so it can be suitably used as an anion exchange membrane material.

[BRIEF DESCRIPTION OF THE DRAWINGS]

FIG. 1 shows hydration number ($\lambda$) vs. IEC graph at room temperature of x-PBB-SEBS membranes of Examples 1 to 3, along with SEBS-based AEMs (open symbols) and poly(phenylene)-based AEMs (solid symbols) in $OH^-$ form as reported in the literature.
FIG. 2 shows (a) TGA graphs from 30 °C to 250 °C and (b) DSC graphs from - 20°C to 10 °C of x-PBB-SEBS membranes of Examples 1 to 3.
FIG. 3 shows (a) hydroxide ion conductivity (solid line) and normalized conductivity (dotted line), and (b) normalized

conductivity and 95% RH conductivity at 60 °C of x-PBB-SEBS membranes of Examples 1 to 3.

FIG. 4 shows (a) AFM image of 30x-PBB-SEBS, (b) AFM image of 40x-PBB-SEBS, (c) AFM image of 50x-PBB-SEBS, (d) TEM image of 30x-PBB-SEBS, (e) TEM image of 40x-PBB-SEBS and (f) TEM image of 50x-PBB-SEBS.

FIG. 5 shows (a) hydroxide ion conductivity retention, and (b) IEC retention of x-PBB-SEBS membranes after being treated in 2 M KOH at 80 °C.

FIG. 6 shows single-cell performance of x-PBB-SEBS membranes at (a) 100%/100% RH and (b) 70%/100% RH under the conditions of 60 °C and $H_2/O_2$ 200/400 mL $min^{-1}$.

FIG. 7 shows $^1H$ NMR spectrum of poly(bibenzyl N-methyl piperidine) 2.

FIG. 8 shows $^1H$ NMR spectra of (a) bromohexanoyl SEBS 4 and (b) bromohexyl SEBS 3.

FIG. 9 shows images of crosslinked(bibenzyl N-methyl piperidinium)-SEBS membranes (x-PBB-SEBS) with varying crosslinking degrees.

FIG. 10 shows IR spectra of x-PBB-SEBS membranes before (dashed) and after (solid) TMA treatment

FIG. 11 shows mechanical properties of x-PBB-SEBS membranes at 50% RH.

FIG. 12 shows a comparison of Young's modulus and elongation at break between x-PBB-SEBS membranes and typical AEMs in $OH^-$ form from the literature (inset shows the elongation at break from 0% to 150%).

FIG. 13 shows (a) thermogravimetric analysis (TGA) and (b) differential scanning calorimetry (DSC) curves of x-PBB-SEBS membranes.

FIG. 14 shows a comparison of normalized conductivity at room temperature of x-PBB-SEBS membranes and normalized conductivity of representative membranes reported in the literature.

FIG. 15 shows TGA curves of 40x-PBB-SEBS membranes before and after oxidative stability tests in the temperature range of 30 °C to 800 °C.

FIG. 16 shows a comparison of maximum power density of x-PBB-SEBS membranes at 100%/100% A/C RH (red) and 70%/100% A/C RH (blue) under the conditions of 60 °C and $H_2/O_2$ 200/400 mL $min^{-1}$.

[DETAILED DESCRIPTION OF THE EMBODIMENTS]

The terminology used herein is for the purpose of describing particular embodiments only and is not intended to be limiting of the invention. The singular forms are intended to include the plural forms as well, unless the context clearly indicates otherwise.

It will be further understood that the terms "include", "comprise", or "have" when used in this disclosure, specify the presence of stated features, steps, components, or combinations thereof, but do not preclude the presence or addition of one or more other features, steps, components, or combinations thereof.

As the present invention can be variously modified and have various forms, specific embodiments thereof are shown by way of examples and will be described in detail. However, it is not intended to limit the present invention to the particular form disclosed and it should be understood that the present invention includes all modifications, equivalents, and replacements within the idea and technical scope of the present invention.

Hereinafter, the present invention will be described in detail.

According to one embodiment of the present disclosure, there is provided a crosslinked copolymer including a first chain represented by the following Chemical Formula 1 and a second chain represented by the following Chemical Formula 2, wherein the first chain and the second chain are crosslinked with each other:

[Chemical Formula 1]

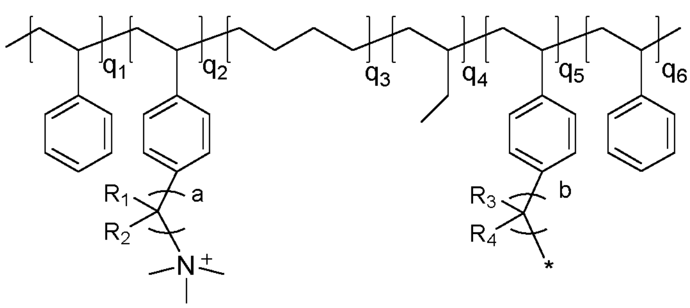

in Chemical Formula 1,

* is a bonding position with Chemical Formula 2,

a sum of $q_1$, $q_2$, $q_5$, and $q_6$ is an integer of 100 to 1,000,

a sum of $q_3$ and $q_4$ is an integer of 150 to 2,000,
a and b are each independently an integer of 3 to 10, and
$R_1$ to $R_4$ are each independently hydrogen or $-(CH_2)_p-CH_3$, wherein p is an integer of 0 to 5,

[Chemical Formula 2]

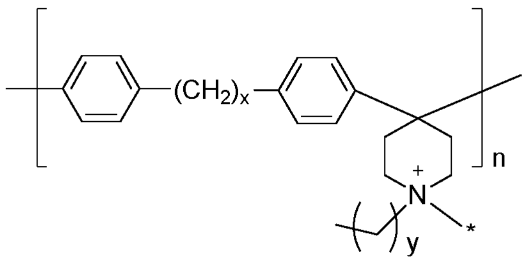

in Chemical Formula 2,

* is a bonding position with Chemical Formula 1,
x and y are each independently an integer of 0 to 10, and
n is an integer of 10 to 1000.

The crosslinked copolymer of the present disclosure is characterized in that a poly(styrene-b-ethylene-co-butylene-b-styrene) (SEBS)-based first chain and a poly(aryl piperidinum)-based second chain are crosslinked.

The first chain of the crosslinked copolymer has elastic properties, the second chain has rigid properties, and both the first and second chains exhibit phase separation. As the first chain and the second chain are chemically crosslinked, the crosslinked copolymer of the present disclosure exhibits excellent mechanical properties, that is, high elongation at break and Young's modulus along with appropriate tensile strength.

In addition, the crosslinked copolymer has excellent water retention capacity, high ionic conductivity, and excellent alkaline stability due to the structural characteristics. Accordingly, the crosslinked copolymer may be suitably used as an anion exchange membrane for fuel cells or the like.

The ratio of the first chain represented by the Chemical Formula 1 and the second chain represented by the Chemical Formula 2 may be adjusted according to desired physical properties. For example, the crosslinked copolymer may include 10 mol or more, 20 mol or more, 30 mol or more, or 40 mol or more, and 70 mol or less, 60 mol or less, or 50 mol or less of the second chain based on 100 mol of the first chain. When the ratio of the first chain and the second chain of the crosslinked copolymer satisfies the above range, excellent mechanical properties and electrochemical properties may be achieved.

Preferably, the sum of $q_1$, $q_2$, $q_5$, and $q_6$ may be an integer of 100 or more, 150 or more, 200 or more, 250 or more, 300 or more, 350 or more, 400 or more, 450 or more, or 500 or more, and 1,000 or less, 950 or less, 900 or less, 850 or less, or 800 or less.

Preferably, the sum of $q_3$ and $q_4$ may be an integer of 150 or more, 200 or more, 250 or more, 300 or more, 350 or more, 400 or more, 450 or more, 500 or more, 550 or more, or 600 or more, and 2,000 or less, 1,800 or less, 1,600 or less, 1,500 or less, 1,400 or less, 1,200 or less, or 1,000 or less.

Preferably, $q_1$ to $q_6$ may each independently be an integer of 10 or more, 20 or more, 25 or more, or 30 or more, and 500 or less, 450 or less, 400 or less, 350 or less, or 300 or less.

Preferably, the ratio of the sum of $q_1$, $q_2$, $q_5$, and $q_6$ to the sum of $q_1$ to $q_6$, that is, the total mole fraction of styrene-derived repeating units relative to all repeating units in Chemical Formula 1 may be 0.2 or more, 0.25 or more, or 0.3 or more, and 0.5 or less, or 0.45 or less.

Preferably, the ratio of the sum of $q_1$ and $q_6$ to the sum of $q_1$, $q_2$, $q_5$, and $q_6$, that is, the total mole fraction of unsubstituted styrene repeating units relative to all styrene-derived repeating units in Chemical Formula 1 may be 0.2 or more, 0.25 or more, 0.3 or more, or 0.35 or more, and 0.5 or less, 0.45 or less, or 0.4 or less.

Preferably, a and b may each independently be an integer of 3 or more, or 4 or more, and 10 or less, 9 or less, 8 or less, 7 or less, or 6 or less.

Preferably, $R_1$ to $R_4$ are each independently hydrogen or $-(CH_2)_x-CH_3$, and x may be an integer of 0 to 3, or an integer of 0 to 2. Preferably, $R_1$ to $R_4$ may all be hydrogen.

Preferably, n is an integer of 10 or more, 100 or more, or 150 or more, and 1000 or less, or 500 or less.

Preferably, x is an integer of 1 or more, or 2 or more, and 9 or less, 7 or less, 5 or less, 4 or less or 3 or less.

Preferably, y is an integer of 0 or more, and 7 or less, 5 or less, 3 or less, or 2 or less.

Specifically, the crosslinked copolymer may include a repeating unit represented by the following Chemical Formula 3:

[Chemical Formula 3]

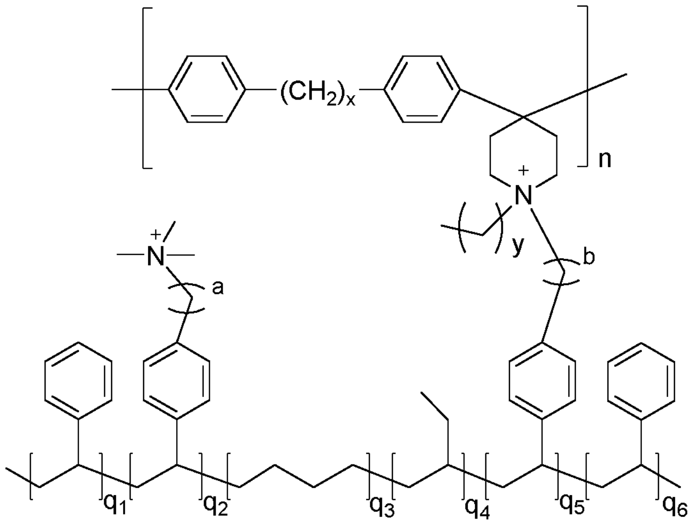

in Chemical Formula 3, $q_1$ to $q_6$, a, b, x, y, and n are as defined in the Chemical Formulae 1 and 2.

Preferably, the crosslinked copolymer may include a repeating unit represented by the following Chemical Formula 4:

[Chemical Formula 4]

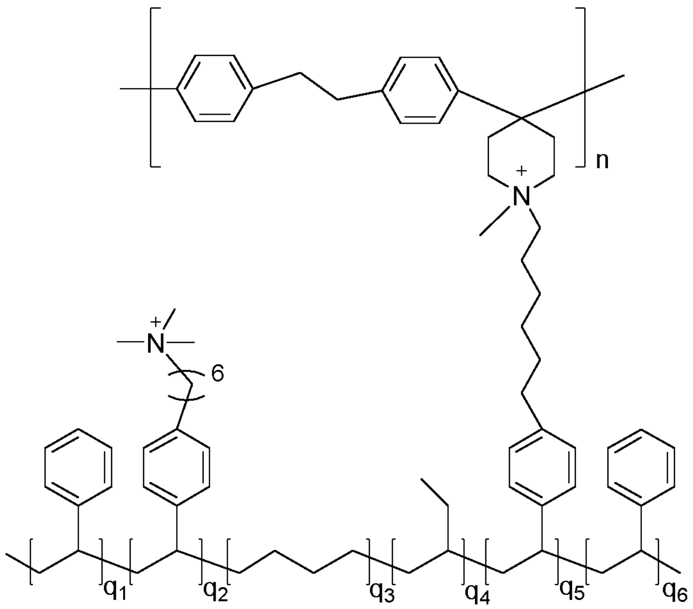

in Chemical Formula 4, $q_1$ to $q_6$, and n are as defined in the Chemical Formulae 1 and 2.

The above crosslinked copolymer has a positively charged quaternary ammonium group and can selectively pass only anions. Therefore, the crosslinked copolymer can be applied as an anion exchange membrane. The counterion (anion) group for the cation (quaternary ammonium group) of the crosslinked copolymer may be $OH^-$, $Cl^-$, $Br^-$, or $HCO_3^-$, preferably $OH^-$.

In addition, the crosslinked copolymer exhibits excellent ion conduction efficiency and alkaline stability due to phase separation properties.

Accordingly, according to one embodiment of the present disclosure, there is provided a polymer membrane

including the crosslinked copolymer.

The polymer membrane including the crosslinked copolymer may have a thickness of 20 μm or more, 30 μm or more, 45 μm or more, or 55 μm or more, and 70 μm or less, 60 μm or less, or 55 μm or less. When the polymer membrane has a thickness satisfying the above range, it exhibits high mechanical properties and excellent electrochemical properties, making it suitable for use as an anion exchange membrane.

As the above-described polymer membrane includes the crosslinked copolymer including the first chain and the second chain, it has improved mechanical strength compared to conventional polymers for AEMs, shows high ionic conductivity while exhibiting appropriate IEC, and has great alkaline stability. Accordingly, a polymer membrane having the above physical properties may be suitably used as an anion exchange membrane included in a fuel cell or the like.

Meanwhile, according to one embodiment of the present disclosure, there is provided a method for preparing the above-described crosslinked copolymer. Specifically, the method for preparing the crosslinked copolymer includes the following steps.

(a) preparing a polymer represented by the following Chemical Formula 1-1;
(b) preparing a polymer represented by the following Chemical Formula 2-1; and
(c) preparing a crosslinked copolymer by crosslinking the polymer represented by the following Chemical Formula 1-1 and the polymer represented by the following Chemical Formula 2-1:

[Chemical Formula 1-1]

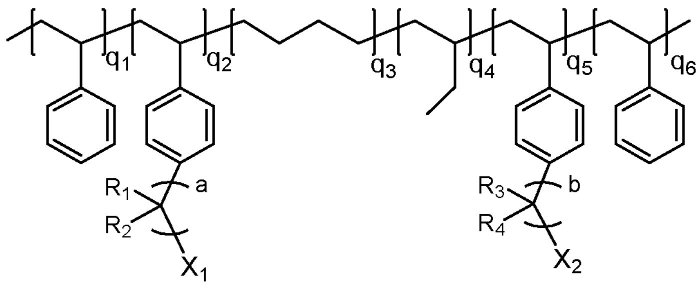

in Chemical Formula 1-1,

a sum of $q_1$, $q_2$, $q_5$, and $q_6$ is an integer of 100 to 1,000,
a sum of $q_3$ and $q_4$ is an integer of 150 to 2,000,
a and b are each independently an integer of 3 to 10,
$R_1$ to $R_4$ are each independently hydrogen or $-(CH_2)_p-CH_3$, wherein p is an integer of 0 to 5, and
$X_1$ and $X_2$ are each independently a halogen group,

[Chemical Formula 2-1]

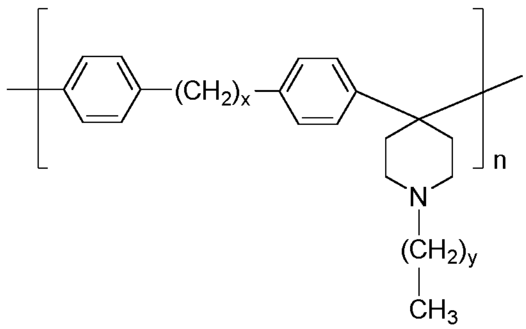

in Chemical Formula 2-1,

x and y are each independently an integer of 0 to 10, and
n is an integer of 10 to 1000.

Preferred ranges of $q_1$ to $q_6$, a, b, $R_1$ to $R_4$, x, y, and n in Chemical Formulae 1-1 and 2-1 are the same as those described in Chemical Formulae 1 and 2 above.

$X_1$ and $X_2$ are each independently F, Cl, Br, or I, preferably Br.

The step (a) is a step of introducing a halogen alkyl group into the styrene portion of the SEBS polymer. Specifically, the poly(styrene-b-ethylene-co-butylene-b-styrene)-based polymer represented by Chemical Formula 1-1 can be prepared through a Friedel-Crafts acylation reaction of SEBS and a reduction reaction of a carbonyl group.

The acyl halide used in the acylation reaction is selected in consideration of the number of a and b. Specifically, as the acyl halide, alkanoyl chloride having a halogen group at the end of an alkyl chain represented by X-R-COCl (wherein X is halogen and R is $C_{1-29}$ alkyl) may be used. When a and b are different from each other or $X_1$ and $X_2$ are different from each other, the acylation reaction may be performed two or more times using different types of acyl halides.

Aluminum chloride ($AlCl_3$) may be used as a catalyst for the acylation reaction, and the reaction may be performed at 20 to 30 °C for 8 to 24 hours.

The reduction reaction of a carbonyl group may be performed using methods known in the art without limitation. For example, the carbonyl group may be reduced by adding triethylsilane and trifluoroacetic acid, followed by reacting at 90 to 120 °C for 20 to 30 hours. Through this reaction, a poly(styrene-b-ethylene-co-butylene-b-styrene)-based polymer represented by the Chemical Formula 1-1 can be obtained.

It is preferable that the poly(styrene-b-ethylene-co-butylene-b-styrene)-based copolymer contains 30 mol or more, 40 mol or more, 50 mol or more, 55 mol or more, or 60 mol or more, and 90 mol or less, 80 mol or less, 75 mol or less, 70 mol or less, or 65 mol or less of halogen groups based on 100 mol of styrene repeating units. The number of moles of halogen groups relative to styrene repeating units can be adjusted by adjusting the number of moles of acyl halide relative to the number of moles of styrene in the SEBS polymer during the acylation reaction.

The step (b) is a step of preparing a poly(aryl piperidinum)-based polymer. For example, the polymer represented by the Chemical Formula 2-1 may be prepared by reacting aryl (

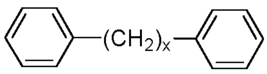

,

wherein x is as described in Chemical Formula 2) and N-alkyl-4-piperidone in the presence of trifluoroacetic acid and trifluoromethanesulfonic acid. The reaction may be carried out, for example, at -10 to 10 °C for 12 to 60 hours.

The step (c) is a step of preparing a crosslinked copolymer by crosslinking the polymer represented by the Chemical Formula 1-1 and the polymer represented by the Chemical Formula 2-1. Since the polymer represented by the Chemical Formula 1-1 contains a halogen group and the polymer represented by the Chemical Formula 2-1 contains a tertiary amine group, the two polymers can be easily crosslinked through a nucleophilic substitution reaction without a separate crosslinking agent.

In the step (c), the polymer represented by the Chemical Formula 2-1 is preferably used in an amount of 10 mol or more, 20 mol or more, 30 mol or more, or 40 mol or more, and 70 mol or less, 60 mol or less, or 50 mol or less based on 100 mol of the halogen groups contained in the polymer represented by the Chemical Formula 1-1. When the molar ratio is satisfied, the prepared crosslinked polymer may have an appropriate ratio of first chain and second chain, and thus may exhibit excellent hydroxide ion conductivity and mechanical properties.

The reaction in step (c) may be performed at 40 to 60 °C for 10 to 16 hours, preferably at 45 to 55 °C for 11 to 13 hours. When the polymerization temperature is less than 40 °C or the reaction time is less than 10 hours, the crosslinking reaction between the polymers does not sufficiently occur, and thus the hydroxide ion conductivity may decrease, thereby reducing alkaline stability. Conversely, when the polymerization temperature exceeds 60 °C or the reaction time exceeds 16 hours, the degree of crosslinking between the polymers excessively increases, resulting in gelation of the crosslinked polymer solution.

Meanwhile, after the step (c), a step (d) of reacting the crosslinked copolymer with trimethylamine may be further included in order to convert all of the halogen groups remaining in the crosslinked copolymer into amine groups. The step (d) may be performed at 40 to 60 °C for 10 to 30 hours, and preferably at 45 to 55 °C for 20 to 30 hours.

As described above, since a halogen functional group is introduced into the SEBS main chain and reacted with the polymer containing an amine group represented by Chemical Formula 2-1 to prepare a crosslinked copolymer in the present disclosure, polymers can be crosslinked quantitatively without side reactions, and the degree of crosslinking can be easily controlled by adjusting the amount of each polymer.

Further, according to the above method, the crosslinked copolymer can be prepared more simply with a high yield, thereby increasing the productivity of the process and reducing costs.

Hereinafter, the present invention will be described in more detail by the following examples. However, the following examples are only for exemplifying the present invention, and the scope of the present invention is not limited only to these.

[Examples]

**<Materials>**

Bibenzyl (99%), aluminum chloride (99%), 6-bromohexanoyl chloride, N-methyl-4-piperidone (97%), and trimethylamine solution (45 wt % in water) were purchased from Sigma-Aldrich (St. Louis, MO, USA). Trifluoromethanesulfonic acid (98%) was obtained from TCI (Tokyo, Japan). Triethylsilane (98%) was obtained from Alfa Aesar (MA, USA). Trifluoroacetic acid was obtained from Daejung Chemicals & Metals (Siheung-si, South Korea). Poly(styrene-b-ethylene-co-butylene-b-styrene) (SEBS, A1535H) with 57% styrene content was obtained from Kraton (Houston, TX, USA). All other chem icals were obtained from other commercial sources.

**<Identification of chemical structure of polymer>**

The chemical structure of the polymer obtained in each step of the following examples was identified via $^1$H NMR spectroscopy and Fourier transform infrared (FTIR) spectroscopy. $^1$H NMR spectra were obtained using a 400 MHz NMR instrument (Agilent 400-MR) using $CDCl_3$ as a solvent. FTIR spectra were obtained using a PerkinElmer Spectrum Two ATR-FTIR spectrometer. Spectra were collected from 4000 to 400 $cm^{-1}$.

**Example 1: Fabrication of 30x-PBB-SEBS (degree of crosslinking: 30%) membrane**

(1) Synthesis of poly(bibenzyl N-methyl piperidine) 2

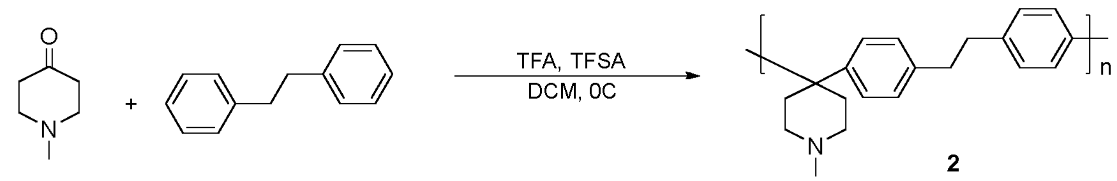


2

(In the above reaction formula, n is 158.)

Bibenzyl (3.00 g, 16.46 mmol) and N-methyl-4-piperidone (2.23 g, 19.75 mmol) were poured into a completely dry 50-mL round-bottom flask under a nitrogen atmosphere and then dissolved in dichloromethane (20 mL) using a magnetic stirrer. After the mixture was fully dissolved, the solution was cooled to 0 °C using an ice bath. Next, trifluoroacetic acid (2.82 g, 24.69 mmol) and trifluoromethanesulfonic acid (24.70 g, 164.60 mmol) were slowly added to the solution with continuous stirring. The color of the solution changed from light brown to dark brown. After 48 hours, the viscous solution was poured into a large amount of KOH solution (500 mL), and the precipitated polymer was filtered onto a filter paper and washed with deionized (DI) water several times to remove any residual reactants. The obtained polymer was dried in a vacuum oven at 80 °C for 24 hours, and this yielded a yellow powder, which was confirmed to be poly(bibenzyl N-methyl piperidine) (4.51 g, 98.8%); $\delta_H$ (400 MHz, $CDCl_3$) 7.85-6.73 (8H, broad signal, $H_{1,2}$), 3.05-2.67 (4H, d, $H_{3,3'}$), 2.60-2.13 (8H, broad signal, $H_{5,5',6}$), 2.12-1.67 (4H, d, $H_{4,4'}$) (FIG. 7).

(2) Synthesis of bromohexyl SEBS 3

(2-1) Synthesis of bromohexanoyl SEBS 4

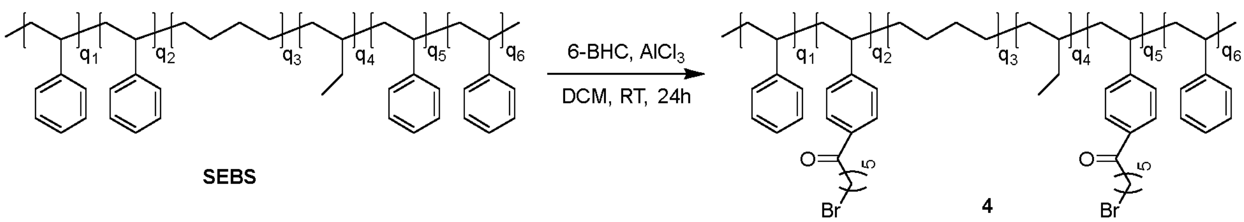


SEBS

4

(In the above reaction formula, the sum of $q_1$, $q_2$, $q_5$, and $q_6$ is 711, the sum of $q_3$ and $q_4$ is 996, and the ratio of the sum of $q_1$

and $q_6$ to the sum of $q_1$, $q_2$, $q_5$, and $q_6$ is 0.3.)

SEBS (10.00 g, 54.73 mmol) was poured into a 1000-mL two-neck round-bottom flask under a nitrogen atmosphere and dissolved in dichloromethane (320 mL) using a magnetic stirrer. After the polymer was fully dissolved, aluminum chloride (5.47 g, 41.05 mmol) and 6-bromohexanoyl chloride (8.76 g, 41.05 mmol) in dichloromethane (80 mL) were added slowly using a dropping funnel. After 24 hours, the reaction mixture was poured into a large amount of ethanol (1500 mL), and the precipitated polymer was filtered onto a filter paper and washed with ethanol several times to remove any residual reactants. The obtained polymer was dried in a desiccator at room temperature for 24 hours, and this yielded a white rubbery product, which was confirmed to be bromohexanoyl SEBS 4 in which bromohexanoyl-functionalized side chains were bonded to 70 mol% of the total 100 mol% of styrene in SEBS (16.40 g, 97.7%); $\delta_H$ (400 MHz, $CDCl_3$) 7.92-7.37 (4H, broad signal, $H_{1,2}$), 7.26-6.28 (10H, broad signal, $H_{3,4}$), 3.50-3.38 (3H, broad signal, $H_{10}$), 3.03-2.80 (3H, broad signal, $H_6$), 2.69-2.35 (2H, broad signal, $H_{12}$), 2.01-0.56 (46H, broad signal, $H_{7-9,11,13-18}$) (FIG. 8a).

(2-2) Synthesis of bromohexyl SEBS 3

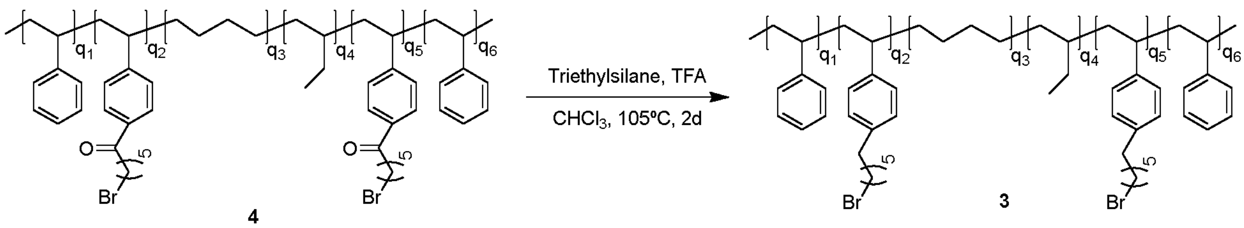


4 3

(In the above reaction formula, the sum of $q_1$, $q_2$, $q_5$, and $q_6$ is 711, the sum of $q_3$ and $q_4$ is 996, and the ratio of the sum of $q_1$ and $q_6$ to the sum of $q_1$, $q_2$, $q_5$, and $q_6$ is 0.3.)

Bromohexanoyl SEBS 4 (16.00 g, 38 mmol) was poured into a 1000-mL two-neck round-bottom flask connected to a reflux condenser and fitted with a magnetic stirrer under a nitrogen atmosphere and then dissolved in chloroform (320 mL). After the polymer was fully dissolved, triethyl silane (60.70 mL, 380 mmol) and trifluoroacetic acid (58.16 mL, 760 mmol) were added. The reaction mixture was slowly heated to 105 °C and was left for 24 hours at this temperature. The reaction mixture was cooled to room temperature, and 1 M KOH (400 mL) was added to neutralize the solution. The organic layer was poured into methanol (1500 mL), and the precipitated polymer was filtered onto a filter paper and washed with methanol several times to remove any residual reactants. The obtained polymer was dried in a desiccator at room temperature for 24 hours, and the bromohexyl SEBS 3 appeared to be a white rubbery product (15.28 g, 93.11%); $\delta_H$ (400 MHz, $CDCl_3$) 7.21-6.27 (12H, broad signal, $H_{1-4}$), 3.48-3.34 (3H, broad signal, $H_{10}$), 2.66-2.27 (5H, broad signal, $H_{6',12}$), 1.99-0.59 (46H, broad signal, $H_{6-9,11,13-18}$) (FIG. 8b).

(3) Fabrication of crosslinked poly(bibenzyl N-methyl piperidinium)-SEBS 1 membrane (30x-PBB-SEBS)

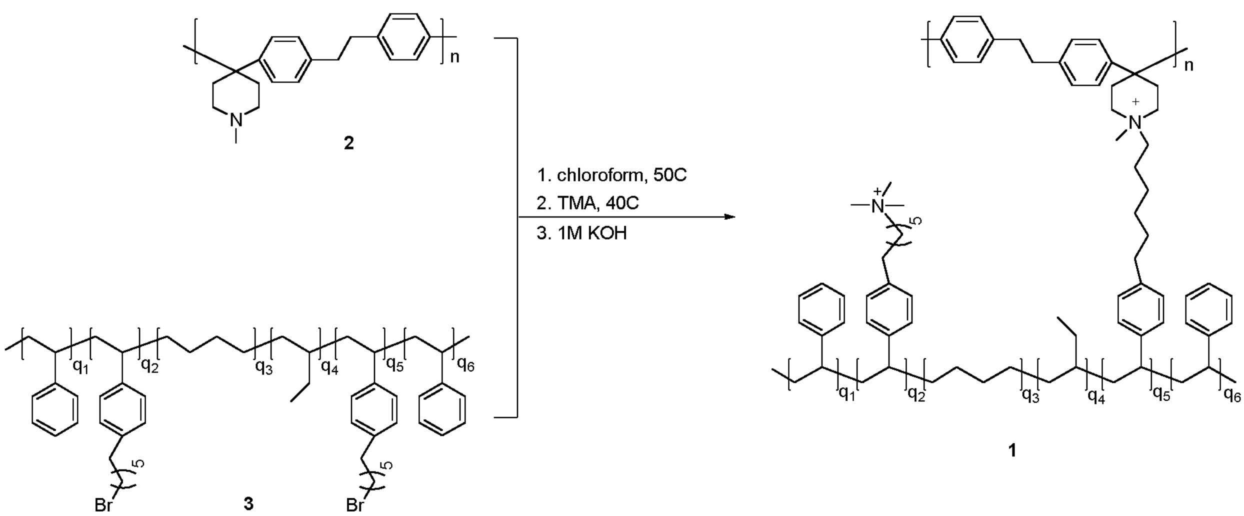


2 3 1

(In the above reaction formula, n is 158, the sum of $q_1$, $q_2$, $q_5$, and $q_6$ is 711, the sum of $q_3$ and $q_4$ is 996, and the ratio of the sum of $q_1$ and $q_6$ to the sum of $q_1$, $q_2$, $q_5$, and $q_6$ is 0.3.)

Poly(bibenzyl N-methyl piperidine) 2, bromohexyl SEBS 3, and HPLC-grade chloroform (20 mL) were placed in 20 mL vials, and the mixture was stirred until a homogenous solution was obtained. Herein, poly(bibenzyl N-methyl piperidine) 2 was used at a ratio of 30 mol% relative to 100 mol% of bromohexyl SEBS 3.

The polymer solution was heated at 40 °C overnight (12 h) to induce crosslinking. The polymer solution was cooled to room temperature and poured into a glass Petri dish provided with a cotton filter before drying at room temperature for 24 h. The prepared membranes were peeled from the Petri dish and immersed in DI water to wash away any residual solvent. Next, the membranes were soaked in trimethylamine (TMA) solution at 45 °C for 24 h, and washed with DI water to remove excess TMA. Thereafter, the membranes were immersed in 1 M KOH solution for at least 24 h at room temperature to exchange $Br^-$ ions for $OH^-$ ions and washed with DI water several times to remove excess KOH, and this yielded a 30x-PPB-SEBS membrane.

In order to confirm that Br in the crosslinked membrane was replaced by TMA, IR changes before and after trimethylamine (TMA) treatment were confirmed (FIG. 10). It was confirmed that the C-Br peak at about 642 $cm^{-1}$ disappeared after TMA treatment, which confirmed that the C-Br bond in x-PBB-SEBS was replaced by TMA.

**Example 2: Fabrication of 40x-PBB-SEBS (degree of crosslinking: 40%) membrane**

A 40x-PBB-SEBS membrane was prepared in the same manner as in Example 1, except that poly(bibenzyl N-methyl piperidine) 2 was used in an amount of 40 mol% relative to bromohexyl SEBS 3 in step (3).

**Example 3: Fabrication of 50x-PBB-SEBS (degree of crosslinking: 50%) membrane**

A 50x-PBB-SEBS membrane was prepared in the same manner as in Example 1, except that poly(bibenzyl N-methyl piperidine) 2 was used in an amount of 50 mol% relative to bromohexyl SEBS 3 in step (3).

Flexible membranes with a thickness of 30 to 35 μm were obtained in Examples 1 to 3 (FIG. 9).

**Experimental Example 1: Ion exchange capacity (IEC), water uptake (WU), and swelling ratio (SR)**

**(1) Ion exchange capacity (IEC)**

a. Experimental IEC

The ion exchange capacity (IEC) of each membrane was measured using the back-titration method. The membranes in their $OH^-$ forms were kept for 24 h in a 0.01 M HCl standard solution. The residual HCl was back titrated with a 0.01 M NaOH standard solution, using a phenolphthalein indicator. The membranes were then dried to measure their weight ($W_{dry}$, g). The following equation was used to calculate the experimental IEC (meq $g^{-1}$) as the moles of exchangeable hydroxide ion per gram:

$$\text{IEC (meq g}^{-1}\text{)} = (C_0V_0 - C_0V_x)/W_{dry}$$

wherein $V_0$ and $V_X$ are the volume of NaOH before the titration and the volume of NaOH consumed in the titration, respectively, $C_0$ is the concentration of NaOH used in the back titration, and $W_{dry}$ is the weight of the membrane after drying in an oven for at least 12 h.

b. Theoretical IEC

Theoretical IEC values were determined based on the number of Br atoms contained in bromohexyl SEBS 3, which was calculated from the $^1$H NMR spectra, along with the masses of the two polymers (2 and 3) used in the crosslinking process.

**(2) Water uptake (WU) and swelling ratio (SR)**

The water uptake (WU, %) and swelling ratio (SR, %) were calculated by soaking each circular membrane of Examples 1 to 3 in water at 20 °C and 80 °C. The membranes in their $OH^-$ form were immersed in deionized water for at least 24 h, the surface of the membrane was wiped, and the weight ($W_{wet}$), length ($L_{wet}$) and thickness ($T_{wet}$) were quickly measured. The membrane was dried under vacuum for 24 h, and the weight ($W_{dry}$), length ($L_{dry}$), and thickness ($T_{dry}$) of the

dry membrane were also taken. The following equations were used to determine the water uptake (%) and swelling ratio (%):

$$WU\ (\%)=(W_{wet}-W_{dry})/W_{dry}\ \times 100$$

$$SR\ (\%)=(L_{wet}-L_{dry})/L_{dry}\ \times 100\ \text{or}\ (T_{wet}-T_{dry})/T_{dry}\ \times 100$$

The hydration number (λ) of each membrane was calculated from the WU and the experimental IEC of each membrane. The following equation was used to determine the hydration number:

$$\text{Hydration number}\ (\lambda)=(\text{Water uptake}\ (\%)\times 1000)/(\text{IEC}\times 18)$$

**(3) Result**

The IEC, WU, and SR of the x-PBB-SEBS membranes of Examples 1 to 3 were listed in Table 1 below.

[Table 1]

| | IEC (meq $g^{-1}$) | | WU (%) | | SR (%) | | | |
|---|---|---|---|---|---|---|---|---|
| | The[a] | Exp[b] | 20 °C | 80 °C | 20 °C ( Δ L) | 80 °C ( Δ L) | 20 °C ( Δ T) | 80 °C ( Δ T) |
| 30x-PBB-SEBS | 1.96 | 1.97 ± 0.04 | 123.1 | 136.3 | 31.8 | 36.4 | 38.2 | 45.7 |
| 40x-PBB-SEBS | 1.86 | 1.88 ± 0.06 | 105.4 | 116.9 | 27.3 | 31.8 | 30.1 | 36.4 |
| 50x-PBB-SEBS | 1.77 | 1.78 ± 0.03 | 88.9 | 99.9 | 22.7 | 27.3 | 27.7 | 32.1 |

[a] Theoretical IEC values calculated based on $^1$H NMR spectra
[b] Experimental IEC values measured by back titration

The IEC is defined as the milliequivalent of ion-conducting groups per unit mass of a polymer electrolyte membrane. In general, the higher the IEC of a polymer electrolyte membrane, the more water the membrane can contain (i.e., the higher the WU). Since water can act as a medium for hydroxide ion conduction in AEMs, higher ionic conductivity is achieved when its IEC is higher. However, an excessively high IEC often leads to an increase in the WU, reducing the ionic conductivity via a mechanism called the "dilution effect". When this occurs, the SR of the membrane also increases, thereby degrading its mechanical properties and dimensional stability. Therefore, for AEMs to have high ionic conductivity and good mechanical properties, their IEC needs to be appropriate.

The theoretical IECs of 30x-PBB-SEBS, 40x-PBB-SEBS, and 50x-PBB-SEBS were 1.96, 1.86, and 1.77 meq $g^{-1}$, respectively, and decreased with an increased degree of crosslinking. This was because the total amount of ion-conducting groups introduced decreased as the content of bromohexyl SEBS 3 decreased. Meanwhile, it was confirmed that the experimentally measured IECs of the x-PBB-SEBS membranes were similar to the theoretical values. The fact that the theoretical IEC values were comparable to the experimentally measured IEC values also confirmed that the degree of crosslinking was achieved as intended.

Referring to the WU and SR results of x-PBB-SEBS membranes, both WU and SR decreased with an increased degree of crosslinking, resulting in the increased dimensional stability. This effect was attributed to a decrease in the content of SEBS, an elastic polymer, along with the effect of the chemical bonds between the polymer chains formed via crosslinking, suppressing the expansion of the membrane.

Next, the hydration number (λ value) of each membrane was calculated. As expected, the hydration number of the x-PBB-SEBSs decreased with increased crosslinking degree, as follows: 30x-PBB-SEBS = 34.7, 40x-PBB-SEBS = 31.1, 50x-PBB-SEBS = 27.7.

The hydration numbers of membranes according to Examples 1 to 3 were then compared with those of polyphenylene- and SEBS-based membranes reported in previous studies ([10] J. Mater. Chem. A. Mater. 9(2021) 327-337; [11] Nat. Commun. 12 (2021) 2367; [32] Int. J. Hydrogen Energy 46 (2021) 36301-36313; [33] J. Membr. Sci. 599 (2020), 117829;[35] J. Membr. Sci. (2022), 120029; [48] Korean Patent No. 10-2184530; [53] J. Membr. Sci. 647 (2022), 120341) (FIG. 1).

The results showed that the λ values of the x-PBB-SEBS membranes were between those of SEBS-based AEMs, which have λ values higher than expected for their IEC, and those of the poly (phenylene)-based AEMs, which have λ values lower than expected for their IEC. As discussed above, water acts as a medium for ion conduction, and thus the

hydration number should be high to achieve AEMs with high ionic conductivity. However, too high number may negatively affect the ionic conductivity, so that it is necessary to have an appropriate value. As the x-PBB-SEBS membranes were fabricated by crosslinking two polymers with different properties while adjusting the degree of crosslinking, their hydration number was easy to control.

**Experimental Example 2: Mechanical and thermal properties**

**(1) Mechanical properties**

A benchtop tensile tester (Shimadzu EZ-TEST E2-L, Kyoto, Japan) was used to measure the mechanical properties of the membrane in its $OH^-$ form at a crosshead speed of 10 mm $min^{-1}$ at 25 °C under 50% relative humidity. The cross-sectional area of the sample in its initial state was used to determine the engineering stress. The initial slope of the stress-strain curve was used to calculate the Young's modulus (E). For this test, samples of each membrane were prepared in dumbbell shapes of 40 × 10 mm total area and 20 × 10 mm test area.

**(2) Thermal stability**

The thermal stability of the membranes was investigated by thermogravimetric analysis (TGA) using a Scinco TGA N-1000 instrument (Seoul, Korea). The TGA was operated at a heating rate of 10 °C $min^{-1}$ from 30~800 °C under a nitrogen atmosphere.

The glass transition temperature (Tg) of each membrane was measured by differential scanning calorimetry (DSC) using a PerkinElmer DSC 4000 (Waltham, MA, USA). Samples were prepared in aluminum pans and measured from -40 to 200 °C for two cycles with heating and cooling rates of 10 °C $min^{-1}$. Tg was determined from the second heating cycle.

**(3) Result**

In AEMFCs, an AEM serves as the electrolyte to conduct the $OH^-$ ions generated at the cathode to the anode. It simultaneously acts as a separator that prevents $H_2$ and $O_2$ (or air) used as fuel from crossing from one electrode to the other. Thus, AEMs must have excellent mechanical and thermal properties to be highly resistant to damage or deformation under the cell operating conditions, such as gas flow and temperature.

The stress-strain curves of x-PBB-SEBSs with varying crosslinking degrees were measured (FIG. 11). The results showed that as the crosslinking degree increased, the tensile strength and Young's modulus increased, as follows: 30x-PBB-SEBS: 20.2 MPa and 360.3 MPa < 40x-PBB-SEBS: 25.1 MPa and 485.6 MPa < 50x-PBB-SEBS: 27.3 MPa and 650.4 MPa. In contrast, their elongation at break was found to decrease with increasing degree of crosslinking, as follows: 30x-PBB-SEBS: 75.1% > 40x-PBB-SEBS: 70.3% > 50x-PBB-SEBS: 59.4%. As the crosslinking degree increased, the content of SEBSs, an elastic polymer, decreased; thus, the bonds between the poly(bibenzyl N-methyl piperidine) and the bromohexyl SEBS increased, allowing the polymer chains to bind together more tightly.

The mechanical properties of the x-PBB-SEBS membranes were then compared with those of SEBS-based AEMs ([31] J. Polym. Sci. 58 (2020) 2181-2196; [33] J. Membr. Sci. 599 (2020), 117829; [34] Int. J. Hydrogen Energy 45 (2020) 15658-15671; [35] J. Membr. Sci. (2022), 120029), polyphenylene-based AEMs ([9] J. Power Sources 487 (2021), 229429; [10] J. Mater. Chem. A. Mater. 9(2021) 327-337; [11] Nat. Commun. 12 (2021) 2367; [12] J. Membr. Sci. 621 (2021); [47] J. Membr. Sci. 638 (2021), 119685; [53] J. Membr. Sci. 647 (2022), 120341; [54] Angew. Chem. 133 (2021) 7789-7797), and xTQA-PPO-SEBS AEM ([48] Korean Patent No. 10-2184530) fabricated by crosslinking PPO and SEBS (Table 2).

[Table 2]

| AEMs | Tensile strength (MPa) | Elongation at break (%) | Young's modulus (MPa) | Ref |
|---|---|---|---|---|
| 30x-PBB-SEBS | 20.2 | 75.1 | 360 | - |
| 40x-PBB-SEBS | 25.1 | 70.3 | 486 | - |
| 50x-PBB-SEBS | 27.3 | 59.4 | 650 | - |
| xTQA50-PPO-SEBS | 34.3 | 91.6 | 402 | [48] |
| x-PDTP-PS-10 | 49.2 | 33.4 | - | [47] |
| x-PDTP-PS-20 | 52.4 | 28.5 | - | [47] |
| PFTP-0 | 52 | 71 | 368 | [11] |

(continued)

| AEMs | Tensile strength (MPa) | Elongation at break (%) | Young's modulus (MPa) | Ref |
|---|---|---|---|---|
| PFTP-13 | 48.5 | 30.2 | 521 | [11] |
| PDQA-3 | 6.8 | 11.8 | - | [10] |
| O-PDQA-3 | 7.4 | 19.7 | - | [10] |
| PAP-OH-0 | 54.6 | 22.1 | - | [9] |
| PAP-OH-5% | 28.9 | 24.6 | - | [9] |
| PAP-OH_10% | 31.6 | 12.4 | - | [9] |
| PTP-85 | 34.2 | 24.2 | 620 | [12] |
| PTP-90 | 29.2 | 6.8 | 467 | [12] |
| HQA-SEBS | 8.8 | 237.9 | 26 | [35] |
| HQA-F1-SEBS | 18.7 | 376.6 | 40 | [35] |
| HQA-F5-SEBS | 21.7 | 306.5 | 64 | [35] |
| HQA-C4-SEBS | ≈ 9 | > 300 | - | [33] |
| HQA-C12-SEBS | ≈ 9 | > 300 | - | [33] |
| SEBS-C16 | 8.5 | 716.3 | 16 | [31] |
| SEBS-C16-20C4 | 11.4 | 620.0 | 49 | [31] |
| 50-QA-HQA-xSEBS | 16.2 | 133.6 | 54 | [34] |
| 75-QA-HQA-xSEBS | 14.9 | 45.7 | 90 | [34] |

As a result, the x-PBB-SEBS-based membranes were between the SEBS- and the polyphenylene-based AEMs in terms of tensile strength and elongation at break. It was confirmed that the x-PBB-SEBS membranes were fabricated by crosslinking these two types of polymers with different properties, and thus they exhibited mechanical stability such as excellent tensile strength and Young's modulus along with high elongation at break. Additionally, their mechanical properties could be controlled by adjusting the degree of crosslinking.

The elongation at break and Young's modulus of x-PBB-SEBS were compared with those of AEMs reported in previous studies ([11] Nat. Commun. 12 (2021) 2367; [12] J. Membr. Sci. 621 (2021); [31] J. Polym. Sci. 58 (2020) 2181-2196; [34] Int. J. Hydrogen Energy 45 (2020) 15658-15671; [35] J. Membr. Sci. (2022), 120029; [48] Korean Patent No. 10-2184530) (FIG. 12). The results showed that the x-PBB-SEBS membranes exhibited Young's modulus similar to that of other AEMs; however, when the membranes had similar Young's modulus values, the elongation at break of the x-PBB-SEBS membranes was higher. In particular, the x-PBB-SEBS membranes showed even better mechanical properties than the xTQA-PPO-SEBS membranes fabricated by crosslinking PPO and SEBS reported in previous studies. This was attributed to the crosslinking of poly(bibenzyl N-methyl piperidine) and SEBS both with excellent phase separation, which led to enhanced mechanical properties

Next, the thermal stability of the x-PBB-SEBS membranes was determined using TGA and DSC (FIG. 13). In the TGA curves, weight loss occurred in three stages (FIG. 13a). The first weight loss (30 - 150 °C) was attributed to the evaporation of free and bound water contained in the membrane. As the degree of crosslinking increased, the weight loss decreased because the amount of water contained in the membrane, that is, the water uptake (WU), decreased. The second weight loss (150 - 300 °C) was attributed to the degradation of the conducting groups, and the third weight loss (above 400 °C) was due to the decomposition of the polymer backbone.

DSC analysis was performed to determine the glass transition temperature ($T_g$) of the polymers. In all three x-PBB-SEBSs, no signific peaks were observed at temperatures up to 200 °C, which is the decomposition temperature of QA (FIG. 13b). Given that the $T_g$ of SEBS or functionalized SEBS is generally between 50 and 70 °C, this observation confirmed that the crosslinking of polymers with high rigidity contributed to enhancing the thermal stability.

Based on these TGA and DSC results, all three x-PBB-SEBS membranes exhibited suitable thermal stability to be used in the temperature range of 60 - 80 °C, which corresponds to the typical operating conditions of AEMFCs.

**Experimental Example 3: Water retention capacity**

**(1) Measurement method**

The freezing water and non-freezing water contents of the membranes were measured by DSC using a PerkinElmer DSC 4000. A sample fully hydrated membrane was sealed in an aluminum pan, and a sealed empty aluminum pan was also prepared for use as a reference. Both pans were weighed and frozen to -40 °C inside the DSC chamber. Then, the temperature was held constant while the system equilibrated. After that, the DSC chamber was heated to 20 °C at a heating rate of 2 °C $min^{-1}$. This cycle was repeated twice, and values were taken from the second heat cycle. The amount of freezing water in each membrane was calculated by integrating the peak area of the melt endotherm ($\Delta H_m$). The WU (%) of the membrane was used to determine the total water content. The freezing water and non-freezing water contents were calculated using the following equations:

Freezing water (%) = [melting enthalpy (J $g^{-1}$)]/[melting endothermic heat of funsion of pure water (334 J $g^{-1}$)] × 100

Non-freezing water (%) = total water (%) freezing watc

**(2) Result**

AEMs must have high WU to provide high ionic conductivity and good cell performance. The water contained in a membrane can be divided into free water and bound water. Free water does not actively interact with the ion-conducting groups, so its freezing and boiling temperatures are comparable to those of normal water. In contrast, bound water strongly interacts with ion-conducting groups and thus exhibits lower freezing and higher boiling temperatures than free water. According to previous studies, it is important to ensure that the content of bound water in a membrane is high to achieve high-performance fuel cells, because in the real-world operating conditions of fuel cells, that is, in high temperature and 90%-95% RH conditions, the amount of free water in a membrane is less likely to be high.

The bound water content of the x-PBB-SEBS membranes was then analyzed using TGA and DSC (FIG. 2). In the TGA curves, the weight loss from 30 °C to 100 °C was classified as free water, and the weight loss in the range from 100 °C to the temperature where the decomposition of ion-conducting groups occurred was classified as bound water (FIG. 2a). Given that the WUs of three x-PBB-SEBS membranes are different, this analysis has a limitation in that it is not a quantitative comparison of bound water but rather a relative comparison.

The results showed that the bound water content of the membrane increased with an increased crosslinking degree, as follows: 30x-PBB-SEBS : 19.71 % < 40x-PBB-SEBS : 28.34% < 50x-PBB-SEBS : 33.42%. This was attributed to an increase in the interaction between the ion-conducting groups and water with an increased crosslinking degree. To confirm this interpretation, DSC was further used to analyze the freezable water and non-freezable water (FIG. 2 and Table 3). As a result, all three x-PBB-SEBS membranes of Example 1 to 3 had a freezing temperature ($T_F$: dashed line) lower than 0 °C, which is the freezing point of water, suggesting that the ion-conducting groups interacted with the water. Also, as the crosslinking degree increased, the content of non-freezing bound water increased, and the freezing temperature of water ($T_F$) shifted toward lower temperatures as follows: 30x-PBB-SEBS : -2.7 °C > 40x-PBB-SEBS : -4.5 °C > 50x-PBB-SEBS : -6.8 °C. This was attributed to an increase in the crosslinking degree, leading to enhanced interactions between water and the ion-conducting groups, which was also consistent with the trend of the TGA results regarding the bound water content.

[Table 3]

| | Free water (%) | Bound water (%) | Non-freezing bound water (%) |
|---|---|---|---|
| 30x-PBB-SEBS | 80.29 | 19.71 | 77.66 |
| 40x-PBB-SEBS | 71.66 | 28.34 | 85.52 |
| 50x-PBB-SEBS | 66.58 | 33.42 | 92.36 |

**Experimental Example 4: Morphology and hydroxide ion conductivity**

**(1) Morphological analysis**

The morphology of each membrane was analyzed using a field emission transmission electron microscope (FE-TEM, Talos F200X, Thermo Fisher Scientific, MA, USA) image at an accelerating voltage of 200 kV. The samples were

prepared as follows: 3-4 drops of 1 wt% polymer solution in $CHCl_3$ were placed on a copper grid to make a thin homogeneous film. The grid was dried at 40 °C for 12 hours, then treated with TMA solution at 45 °C for 12 hours. After TMA treatment, the grid was washed with DI water to remove excess TMA and dried in a 40 °C oven.

The microphase separation of the membranes was observed using atomic force microscopy (AFM, Bruker MULTIMODE-8-AM, Billerica, MA, USA).

(2) Hydroxide ion conductivity

The hydroxide ion conductivity (σ) of each membrane was measured using a two-probe impedance spectroscopy method using an AC impedance analyzer (SP-200, BioLogic SAS, Claix, France). The electrode systems were connected at frequencies from 100 mHz to 2 MHz. Rectangular samples were prepared with the dimensions 1 × 4 cm. The hydroxide ion conductivity was measured using the resistance (R) in DI water from 20 °C to 80 °C. The hydroxide ion conductivity was calculated using the following equation:

$$\sigma = L/(R \times A)$$

wherein L is the distance between the reference electrodes and A is the cross-sectional area of the membrane.

**(3) Result**

The ionic conductivity of AEMs is one of the most important factors that directly affect the performance of the cells. Accordingly, the hydroxide ion conductivity of the x-PBB-SEBS membranes with varying crosslinking degrees was measured in water at 20-80 °C. Further, the normalized conductivity was calculated by dividing the hydroxide ion conductivity by the IEC to compare the overall ion conduction efficiency of each membrane (FIG. 3a and Table 4).

As a result, both the hydroxide ion conductivity and the normalized conductivity were the highest in 40x-PBB-SEBS, as 72.28-146.25 mS $cm^{-1}$ and 38.45-77.79 mS $cm^{-1}$, respectively. Since IEC in AEMs is related to the number of ion-conducting groups, membranes with high IEC generally have high conductivity. 40x-PBB-SEBS (1.88 meq $g^{-1}$) with a lower IEC exhibited a higher ionic conductivity than 30x-PBB-SEBS (1.97 meq $g^{-1}$) with a 30 % crosslinking degree, and this may be attributed to an increase in the interactions between the ion-conducting groups and water in the case of the membrane having a 40 % crosslinking degree and the consequent increase in the bound water content. Meanwhile, according to the above TGA and DSC measurement results, 50x-PBB-SEBS showed a higher bound water content than 40x-PBB-SEBS. This implies that the ionic conductivity of the x-PBB-SEBS membranes was affected by factors other than the water retention capacity.

In addition, the RH conductivity of the x-PBB-SEBS membranes was measured under fuel cell operating conditions, that is, 60 °C and 95% relative humidity (RH) conditions (FIG. 3b and Table 4). From the measurement results, it was confirmed that the behavior of ionic conductivity under fuel cell operating conditions is more closely related to the normalized conductivity, that is, ion conduction efficiency, than conductivity in water.

[Table 4]

| | $OH^-$ conductivity (mS $cm^{-1}$) | | | | RH conductivity[a] (mS $cm^{-1}$) |
|---|---|---|---|---|---|
| | 20 °C | 40 °C | 60 °C | 80 °C | |
| 30x-PBB-SEBS | 64.47 ± 0.02 | 89.02 ± 0.03 | 115.82 ± 0.15 | 142.79 ± 0.21 | 72.53 ± 0.05 |
| 40x-PBB-SEBS | 72.28 ± 0.20 | 95.49 ± 0.03 | 122.94 ± 0.13 | 146.25 ± 0.13 | 95.18 ± 0.34 |
| 50x-PBB-SEBS | 65.79 ± 0.12 | 85.65 ± 0.06 | 108.83 ± 0.14 | 131.92 ± 0.47 | 79.96 ± 0.26 |
| [a] measured at 60°C and 95% RH | | | | | |

Subsequently, the morphologies of xPBB-SEBS membranes with varying crosslinking degrees were analyzed. In the AFM images, a hydrophilic-hydrophobic phase separation was clearly observed in all three membranes (FIG. 4a-4c). Particularly, this phase separation became more pronounced in 40x-PBB-SEBS.

Furthermore, the normalized conductivity of the x-PBB-SEBS membranes was compared with those of SEBS-based AEMs, polyphenylene-based AEMs which are known to exhibit excellent ionic conductivity based on recent reports, and the crosslinked xTri-PPO-SEBS membranes ([7] Nat. Energy 4 (2019) 392-398; [10] J. Mater. Chem. A. Mater. 9(2021)327-337; [11] Nat. Commun. 12 (2021) 2367; [31] J. Polym. Sci. 58 (2020) 2181-2196; [32] Int. J. Hydrogen Energy 46 (2021) 36301-36313; [35] J. Membr. Sci. (2022), 120029; [41] J. Mater. Chem. A. 7 (2019) 6883-6893; [53] J. Membr.

Sci. 647 (2022), 120341; [54] Angew. Chem. 133 (2021) 7789-7797) (FIG. 14). All three x-PBB-SEBS membranes exhibited high normalized conductivity even though their IEC was relatively low (< 2.0 meq $g^{-1}$).

This result was attributed to the introduction of SEBS polymers that enhanced WU of the x-PBB-SEBS membrane, coupled with the effect of crosslinking, which ensured that the WU would not increase excessively. The membranes then had a WU appropriate for efficient ion conduction, thereby having high ion conduction efficiency. In addition, the crosslinking of the two polymers with excellent phase separation contributed to the formation of ion channels, further improving the ion conduction efficiency. Notably, the 40x-PBB-SEBS membrane had one of the highest normalized conductivity (38.45 mS $cm^{-1}$) compared to other AEMs reported in previous studies. As confirmed by the TGA and DSC results above, this was attributed to the high water retention capacity of the membrane, supported by excellent phase separation.

**Experimental Example 5: Alkaline stability**

**(1) Measurement method**

The membranes in their $OH^-$ form were soaked in 2M KOH solution at 80 °C for 720 h in order to evaluate their chemical stability by measuring the changes in IEC and conductivity. Before the measurements, each membrane was soaked in freshly prepared 1M KOH solution at 60 °C for at least 24 h. After this period, the hydroxide ion conductivity of each membrane was measured in deionized water at 20 °C (at 120h-intervals), and the IEC was measured by the back-titration method before and after each alkaline stability test, as previously described.

**(2) Result**

The alkaline stability test results are shown in FIG. 5. In all x-PBB-SEBS membranes with varying crosslinking degrees, the conductivity retention was 99% or above even after 720 h (FIG. 5a). It was also found that the IEC remained almost constant after 720 h for all three membranes (FIG. 5b).

The excellent alkaline stability of the x-PBB-SEBS membranes was attributed to the introduction of the aryl ether-free polymer backbone, which effectively suppressed the decomposition of polymer chains. This suppression, coupled with the effect of crosslinking, contributed to enhancing the chemical stability of the polymer chains and ion-conducting groups. The excellent phase separation of the polymers also enhanced the chemical stability of the membranes.

Meanwhile, the alkaline stabilities of the x-PBB-SEBS membranes according to Examples 1 to 3 were then compared with those of SEBS-based AEMs ([34] Int. J. Hydrogen Energy 45 (2020) 15658-15671; [35] J. Membr. Sci. (2022), 120029), and aryl ether-free polyphenylene-based AEMs ([7] Nat. Energy 4 (2019) 392-398; [10] J. Mater. Chem. A. Mater. 9(2021) 327-337; [11] Nat. Commun. 12 (2021) 2367; [13] J. Membr. Sci. 642 (2022), 119966; [41] J. Mater. Chem. A. 7 (2019) 6883-6893; [42] Energy Environ. Sci. 13 (2020) 3633-3645; [45] Int. J. Hydrogen Energy 46 (2021) 18524-18533; *[47]* J. Membr. Sci. 638 (2021), 119685; [53] J. Membr. Sci. 647 (2022), 120341; [54] Angew. Chem. 133 (2021) 7789-7797; [58] Membranes 10 (2020) 1-16) known to exhibit excellent alkaline stability, as well as with the xTQA-PPO-SEBS membrane ([48] Korean Patent No. 10-2184530] developed in previous study (Table 5).

[Table 5]

| AEMs | Polymer backbone | Cation | Conditions | | | Remaining (%) | Ref. |
|---|---|---|---|---|---|---|---|
| | | | Conc. (M) | Temp. (°C) | Time (h) | | |
| 30x-PBB-SEBS | x-PBB-SEBS | [a]QA, [a]Pip | 2 | 80 | 720 | > 99.0 | - |
| 40x-PBB-SEBS | x-PBB-SEBS | [a]QA, [a]Pip | 2 | 80 | 720 | > 99.0 | - |
| 50x-PBB-SEBS | x-PBB-SEBS | [a]QA, [a]Pip | 2 | 80 | 720 | > 99.0 | - |
| xTQA50-PPO-SEBS | x-PPO-SEBS | [a]QA | 1 | 80 | 500 | 94.4 | [48] |
| PD2TP-25 | PBB | [a]Pip | 1 | 80 | 1000 | 97.3 | [49] |
| PDTP-25 | PBB | [a]Pip | 1 | 80 | 2160 | ~92 | [50] |
| x-PDTP-PS-10 | x-PBB | [a]Pip | 1 | 80 | 2160 | ~89 | [47] |
| PDQA-3 | PBP | [a]Pip | 2 | 80 | 1080 | 94.9 | [10] |
| O-PDQA-3 | PBP | [a]Pip | 2 | 80 | 1080 | 97.2 | [10] |
| PAP-TP-85 | PpTP | [a]Pip | 1 | 100 | 2000 | 97 | [7] |
| PQP-100 | PpQP | [a]Pip | 1 | 80 | 1344 | 75 | [13] |

(continued)

| AEMs | Polymer backbone | Cation | Conditions | | | Remaining (%) | Ref. |
|---|---|---|---|---|---|---|---|
| | | | Conc. (M) | Temp. (°C) | Time (h) | | |
| PFTP-13 | PFN-co-PpTP | [a]Pip | 1 | 80 | 2000 | 97.0 | [11] |
| QPC-TMA | Poly(carbazole) | [a]QA | 1 | 80 | 1000 | ~100 | [42] |
| QAPIB | PBP | [a]QA | 1 | 80 | 1050 | 71.7 | [41] |
| m-PTP-Q1 | PmTP | Pip | 2 | 80 | 1600 | 81.4 | [45] |
| m-PTP-20Q4 | x-PmTP | QA, Pip | 2 | 80 | 1600 | 87.6 | [45] |
| m-p-MP-50 | PmTP-co-PpTP | Pip | 1 | 80 | 500 | 96.4 | [54] |
| HQA-SEBS | SEBS | [a]QA | 1 | 80 | 500 | 88.7 | [35] |
| 50-QA-HQA-xSEBS | x-SEBS | [a]QA | 3 | 80 | 504 | 76.4 | [34] |
| 75-QA-HQA-xSEBS | x-SEBS | [a]QA | 3 | 80 | 504 | 79.7 | [34] |
| FAA-3 | - | - | 1 | 300 | | ~10 | [42] |
| [a]QA=quaternary ammonium, Pip=piperidinium | | | | | | | |

As a result, it was confirmed that the x-PBB-SEBS membranes exhibited excellent alkaline stabilities comparable to those of the AEMs reported to have excellent alkaline stability.

**Experimental Example 6: Oxidative stability**

**(1) Fenton test**

The membranes were soaked in Fenton solution (4 ppm $Fe^{2+}$ in 3 wt% $H_2O_2$) at room temperature (25 °C) for 120 hours at intervals of 24 hours. Thereafter, each membrane was washed with distilled water several times to remove the Fenton solution, then dried in a 40 °C oven for at least 24 hours. The oxidative stability of the membranes was evaluated from their weight and thermal stability changes.

As a result, all three membranes of 30x-PBB-SEBS, 40x-PBB-SEBS, and 50x-PBB-SEBS exhibited excellent oxidative stability with a weight loss of less than 1%, and maintained their shape after the test.

**(2) TGA analysis**

TGA graph analysis was performed before and after the oxidative stability test to examine changes in the structure of 40x-PBB-SEBS (FIG. 15). After drying each membrane in a 40 °C oven for 12 h or more, TGA analysis was performed. As a result, the 40x-PBB-SEBS showed similar TGA graph before and after the oxidative stability test, indicating that its initial polymer structure was maintained during the test.

**Experimental Example 7: Fabrication of membrane electrode assembly (MEA) and single-cell measurements**

**(1) Measurement method**

For the single-cell measurement, the membrane was pre-treated with 1 M KOH for 24 hours and washed with DI water. The catalyst ink was prepared by ultra-sonication with the Pt/C catalyst (Pt/C, 40 wt%, Alfa Aesar, Haverhill, MA, USA), 1-propanol, and an ionomer (FAA-3-SOLUT-10, Fumatech Co., Germany). The Pt was loaded onto the anode and cathode with a coverage of 0.4 mg $cm^{-2}$. Then, the catalyst ink was coated onto the surface of the prepared membranes using an air spray gun. The catalyst-coated membrane was immersed in 1 M KOH solution for 12 hours and washed with DI water. The MEA (membrane electrode assembly) was sandwiched between gas diffusion layers (SIGRACET 39BB) and the gasket, and the active area of the unit cell was 5 $cm^2$. For the single-cell performance test, $H_2/O_2$ was fed into the anode and cathode at 200 and 400 mL $min^{-1}$, respectively. The cell temperature was 60 °C under 100% or 70% RH, and the activation process was performed by repeating the load cycle (0.6, 0.4 V) for 2 hours before the single-cell performance test.

**(2) Result**

The single-cell tests were conducted using the x-PBB-SEBS membranes in 60 °C and 100% RH condition (FIG. 6a). The single cell performance was found to increase, as follows: 30x-PBB-SEBS (504 mW $cm^{-2}$ and 657 mA $cm^{-2}$ @ 0.6 V) < 50x-PBB-SEBS (529 mW $cm^{-2}$ and 677 mA $cm^{-2}$ @ 0.6 V) < 40x-PBB-SEBS (555 mW $cm^{-2}$ and 665 mA $cm^{-2}$ @ 0.6 V). This pattern was consistent with that observed in the RH conductivity measurements rather than the conductivity measured in water. This confirms that the cell performance of AEMs is more dependent on their conductivity under RH conditions than in water, which is also consistent with the results of the previous study.

Subsequently, the single-cell performance was measured after changing the humidification conditions for the x-PBB-SEBS membranes. During the operation of AEMFC, water is consumed in the cathode, while water is generated in the anode. Accordingly, when the anode is subjected to high RH conditions, flooding may occur. Therefore, the single-cell measurement was performed under the anode/cathode RH conditions set to 70%/100%, and each single cell performance was compared with the anode/cathode 100%/100% RH conditions (FIG. 6b and FIG. 16). The single cell performance of the three x-PBB-SEBS membranes exhibited similar trends to those measured in the 100%/100% RH conditions, as follows: 30x-PBB-SEBS (461 mW $cm^{-2}$ and 625 mA $cm^{-2}$ @ 0.6 V) < 50x-PBB_SEBS (503 mW $cm^{-2}$ and 665 mA $cm^{-2}$ @ 0.6 V) < 40x-PBB-SEBS (545 mW $cm^{-2}$ and 665 mA $cm^{-2}$ @ 0.6 V). Further, the peak power density of the 30x, 40x, and 50x-PBB-SEBS remained at 91.5%, 98.2%, 95.1%, respectively, according to the RH conditions. This result is attributed to the increase in water retention capacity and the change in morphology with an increased crosslinking degree.

**Conclusions**

In the crosslinked copolymer according to one embodiment of the present disclosure, the first chain and the second chain exhibiting phase separation were crosslinked to exhibit an excellent phase separation effect, thereby exhibiting high strain characteristics (high elongation at break) with excellent Young's modulus. Thus, it was confirmed that the crosslinked copolymer of the present disclosure had excellent mechanical properties by satisfying both the high stress of the PP-based polymer membrane and the high strain of the SEBS-based polymer membrane.

The crosslinked copolymer exhibited excellent water retention capacity, that is, strong interaction between the ion-conducting groups and water. **In** addition, it was confirmed from the result of AFM and TEM analysis that the crosslinked copolymer had excellent phase separation, that is, the optimal morphology, and as a result, the normalized conductivity, an indicator of the ion conduction efficiency, was excellent.

Further, the crosslinked copolymer showed excellent alkaline stability (over 99% in 2 M KOH at 80 °C), and this was attributed to the crosslinking of the first chain and the second chain, both with aryl ether-free structures. **In** addition, it exhibited excellent oxidative stability due to the excellent phase separation. Additionally, when the crosslinked copolymer was used as an anion exchange membrane for fuel cells, the current density was excellent.

From the above results, it can be confirmed that the crosslinked copolymer of the present disclosure exhibits excellent electrochemical properties and mechanical properties, and the physical properties can be controlled by adjusting the degree of crosslinking. Accordingly, it can be seen that the crosslinked copolymer can be suitably used as an anion exchange membrane material capable of improving the performance and stability of fuel cells or the like.

**Claims**

1. A crosslinked copolymer comprising a first chain represented by the following Chemical Formula 1 and a second chain represented by the following Chemical Formula 2, wherein the first chain and the second chain are crosslinked with each other:

[Chemical Formula 1]

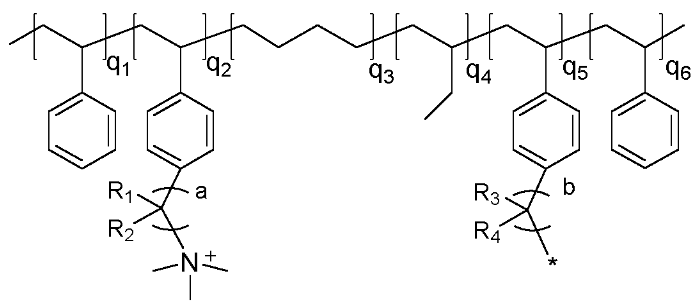

in Chemical Formula 1,

* is a bonding position with Chemical Formula 2,
a sum of $q_1$, $q_2$, $q_5$, and $q_6$ is an integer of 100 to 1,000,
a sum of $q_3$ and $q_4$ is an integer of 150 to 2,000,
a and b are each independently an integer of 3 to 10, and
$R_1$ to $R_4$ are each independently hydrogen or $-(CH_2)_p-CH_3$, wherein p is an integer of 0 to 5,

[Chemical Formula 2]

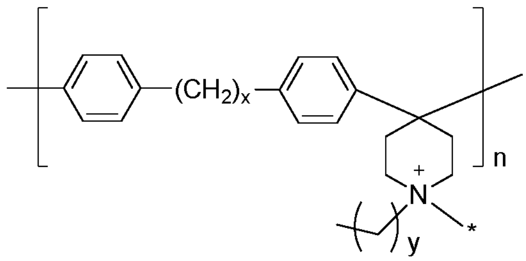

in Chemical Formula 2,

* is a bonding position with Chemical Formula 1,
x and y are each independently an integer of 0 to 10, and
n is an integer of 10 to 1000.

**2.** The crosslinked copolymer of Claim 1,
wherein 10 to 70 mol of the second chain is included based on 100 mol of the first chain.

**3.** The crosslinked copolymer of Claims 1 or 2,
wherein $q_1$ to $q_6$ are each independently an integer of 10 to 500.

**4.** The crosslinked copolymer any one of Claims 1 to 3,
wherein a ratio of the sum of $q_1$, $q_2$, $q_5$, and $q_6$ to the sum of $q_1$ to $q_6$ is 0.2 to 0.5.

**5.** The crosslinked copolymer according to any one of Claims 1 to 4,
wherein a ratio of the sum of $q_1$ and $q_6$ to the sum of $q_1$, $q_2$, $q_5$, and $q_6$ is 0.2 to 0.5.

**6.** The crosslinked copolymer according to any one of Claims 1 to 5,
wherein a and b are each independently an integer of 4 to 6.

**7.** The crosslinked copolymer according to any one of Claims 1 to 6,
wherein the crosslinked copolymer is represented by the following Chemical Formula 3:

[Chemical Formula 3]

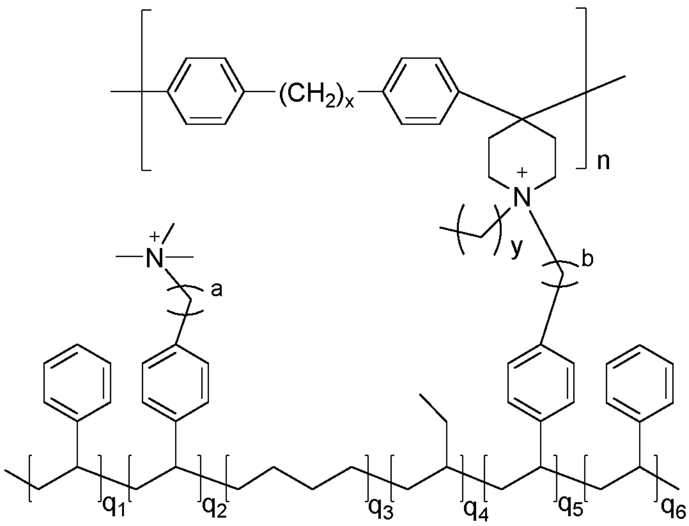

in Chemical Formula 3, $q_1$ to $q_6$, a, b, x, y, and n are as defined in the Chemical Formulae 1 and 2.

**8.** A polymer membrane comprising the crosslinked copolymer of any one of Claims 1 to 7.

**9.** The polymer membrane of Claim 8, wherein the polymer membrane is an anion exchange membrane.

**10.** A method for preparing a crosslinked copolymer comprising the steps of:

(a) preparing a polymer represented by the following Chemical Formula 1-1;
(b) preparing a polymer represented by the following Chemical Formula 2-1; and
(c) preparing a crosslinked copolymer by crosslinking the polymer represented by the following Chemical Formula 1-1 and the polymer represented by the following Chemical Formula 2-1:

[Chemical Formula 1-1]

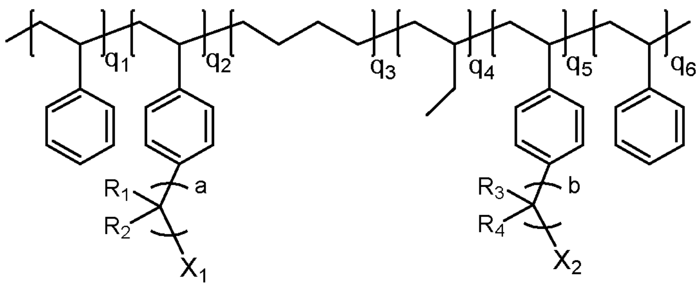

in Chemical Formula 1-1,

a sum of $q_1$, $q_2$, $q_5$, and $q_6$ is an integer of 100 to 1,000,
a sum of $q_3$ and $q_4$ is an integer of 150 to 2,000,
a and b are each independently an integer of 3 to 10,
$R_1$ to $R_4$ are each independently hydrogen or $-(CH_2)_p-CH_3$, wherein p is an integer of 0 to 5, and
$X_1$ and $X_2$ are each independently a halogen group,

[Chemical Formula 2-1]

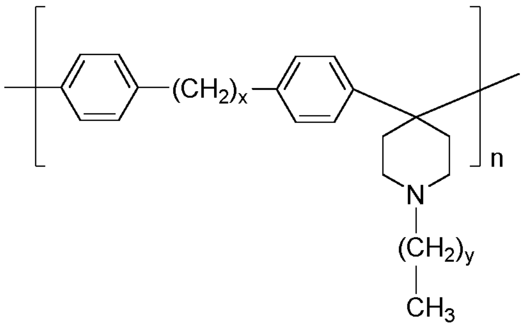

in Chemical Formula 2-1,

x and y are each independently an integer of 0 to 10, and
n is an integer of 10 to 1000.

**11.** The method for preparing a crosslinked copolymer of Claim 10,
further comprising a step (d) of reacting the crosslinked copolymer with trimethylamine.

**12.** The method for preparing a crosslinked copolymer of Claims 10 or 11,
wherein the polymer represented by the Chemical Formula 1-1 contains 30 to 90 mol of halogen groups based on 100 mol of styrene repeating units.

**13.** The method for preparing a crosslinked copolymer according to any one of Claims 10 to 12,
wherein the polymer represented by the Chemical Formula 2-1 is used in an amount of 10 to 70 mol based on 100 mol of the halogen groups contained in the polymer represented by the Chemical Formula 1-1 in the step (c).

【FIG. 1】

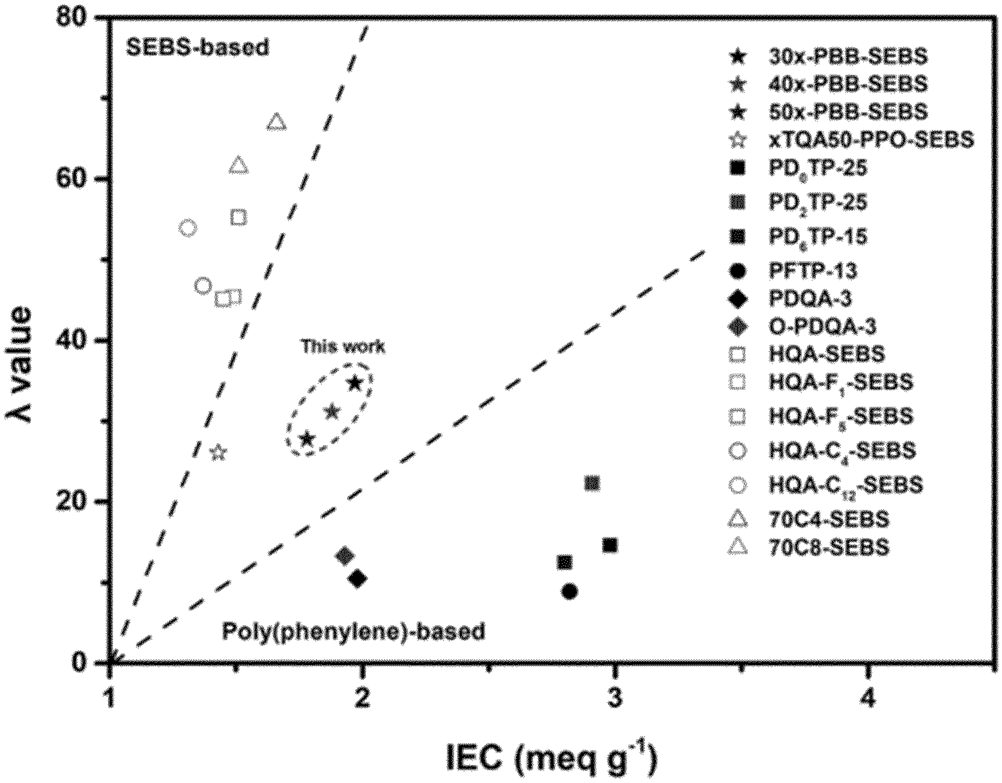
SEBS-based
This work
Poly(phenylene)-based
30x-PBB-SEBS
40x-PBB-SEBS
50x-PBB-SEBS
xTQA50-PPO-SEBS
PD0TP-25
PD2TP-25
PD6TP-15
PFTP-13
PDQA-3
O-PDQA-3
HQA-SEBS
HQA-F1-SEBS
HQA-F5-SEBS
HQA-C4-SEBS
HQA-C12-SEBS
70C4-SEBS
70C8-SEBS
λ value
IEC (meq g-1)
0
20
40
60
80
1
2
3
4

Fig. 2

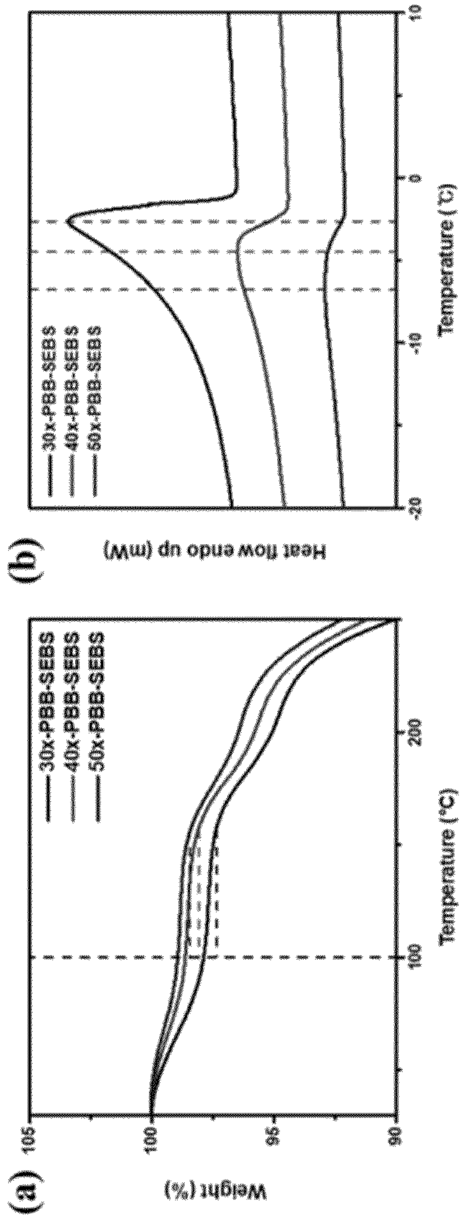
(a)
Weight (%)
Temperature (°C)
30x-PBB-SEBS
40x-PBB-SEBS
50x-PBB-SEBS
(b)
Heat flow endo up (mW)
Temperature (℃)
30x-PBB-SEBS
40x-PBB-SEBS
50x-PBB-SEBS

Fig. 3

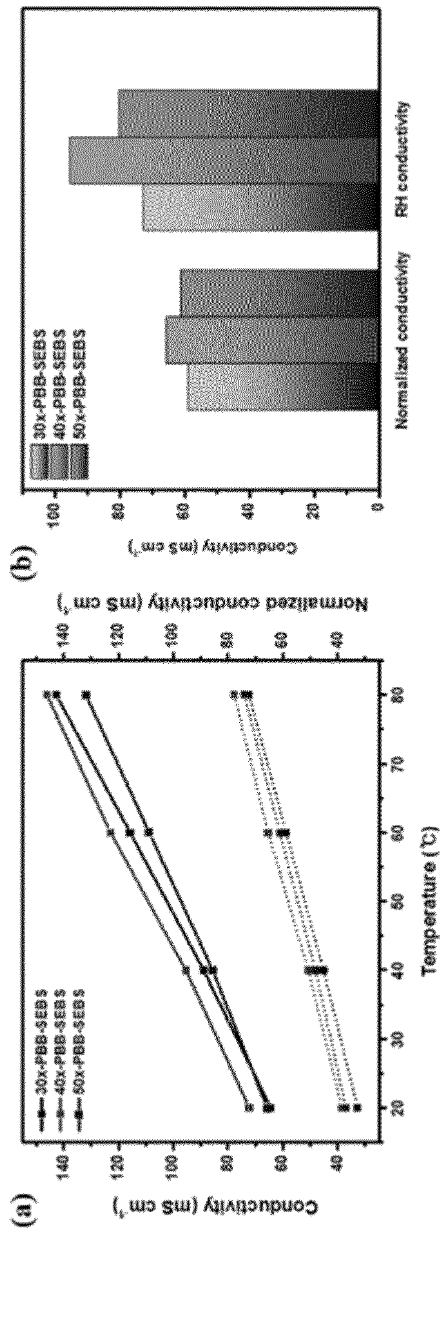
(a)
Conductivity (mS cm-1)
Normalized conductivity (mS cm-1)
Temperature (℃)
30x-PBB-SEBS
40x-PBB-SEBS
50x-PBB-SEBS
(b)
Conductivity (mS cm-1)
Normalized conductivity
RH conductivity

Fig. 4

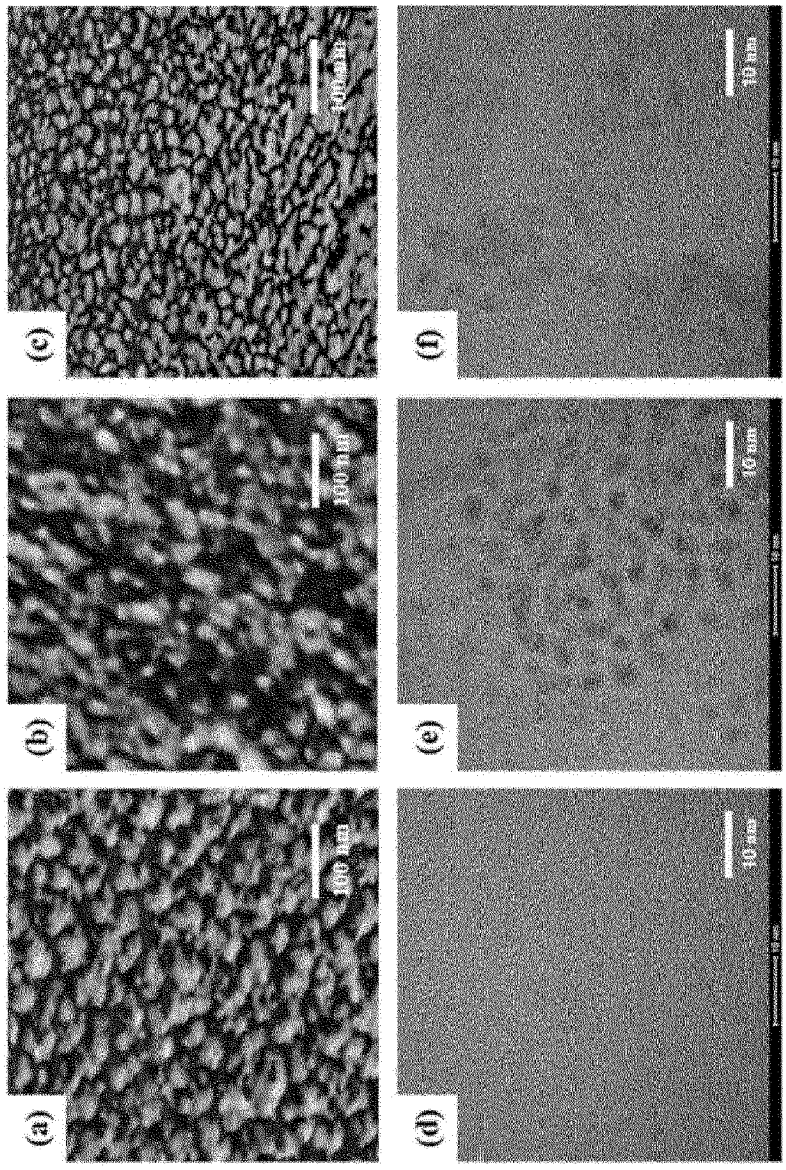

Fig. 5

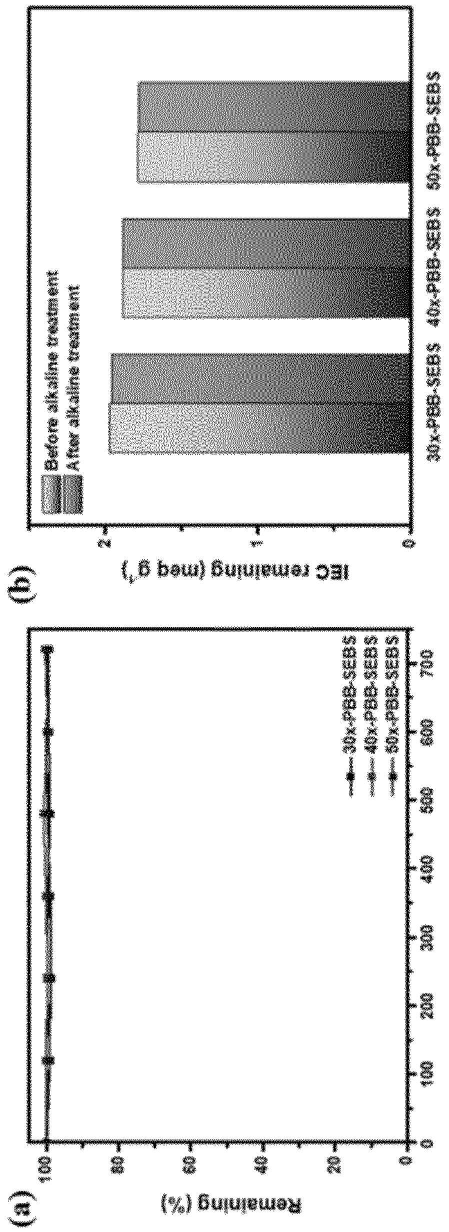
(a)
Remaining (%)
Time (h)
30x-PBB-SEBS
40x-PBB-SEBS
50x-PBB-SEBS
(b)
IEC remaining (meq g-1)
Before alkaline treatment
After alkaline treatment
30x-PBB-SEBS
40x-PBB-SEBS
50x-PBB-SEBS

Fig. 6

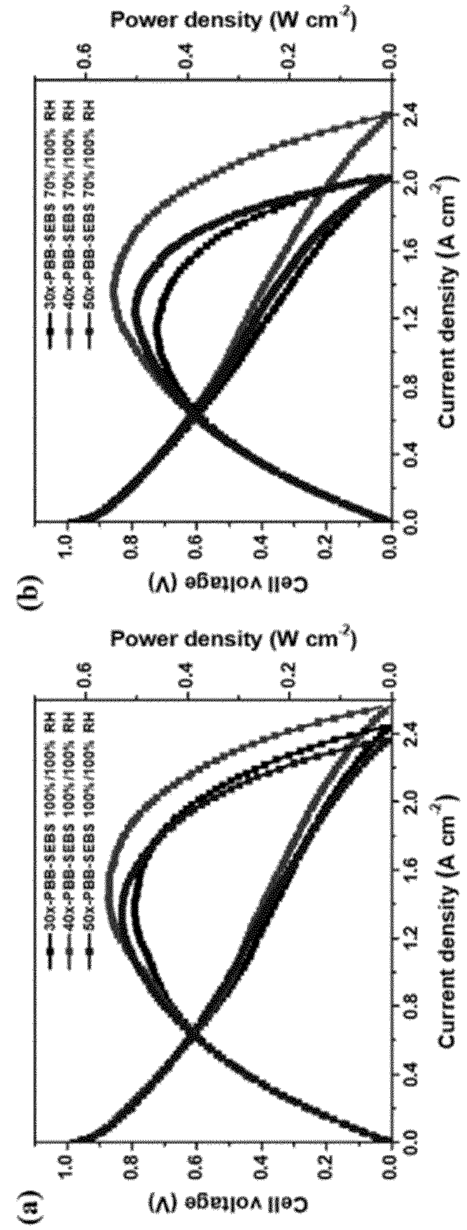
(a)
(b)
Cell voltage (V)
Current density (A cm⁻²)
Power density (W cm⁻²)
30x-PBB-SEBS 100%/100% RH
40x-PBB-SEBS 100%/100% RH
50x-PBB-SEBS 100%/100% RH
30x-PBB-SEBS 70%/100% RH
40x-PBB-SEBS 70%/100% RH
50x-PBB-SEBS 70%/100% RH

Fig. 7

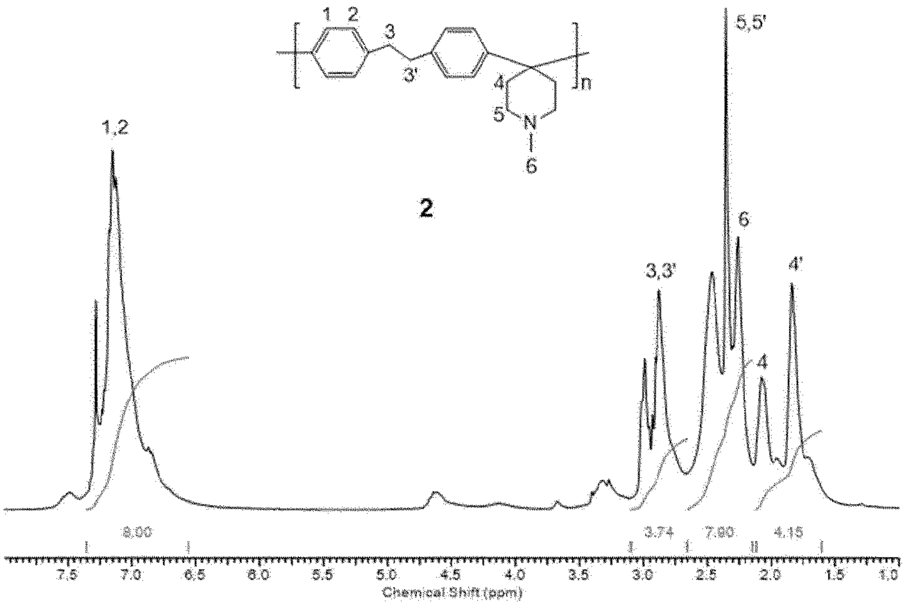


【FIG. 8】

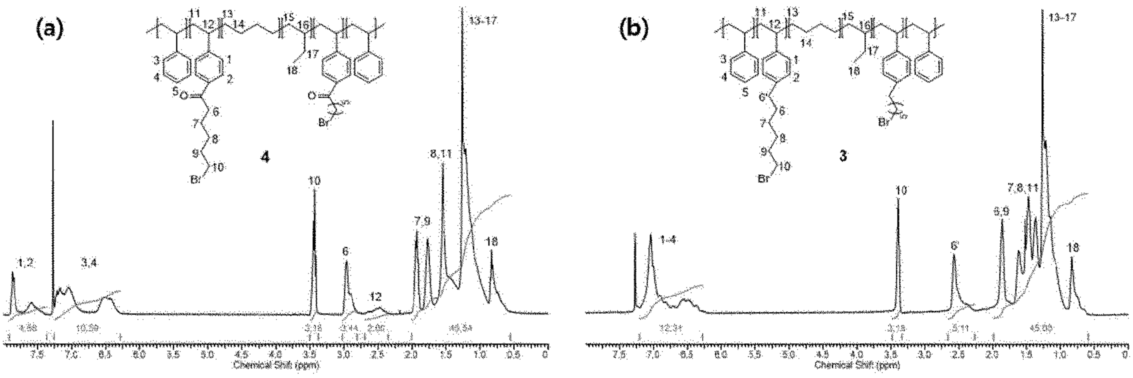


【FIG. 9】

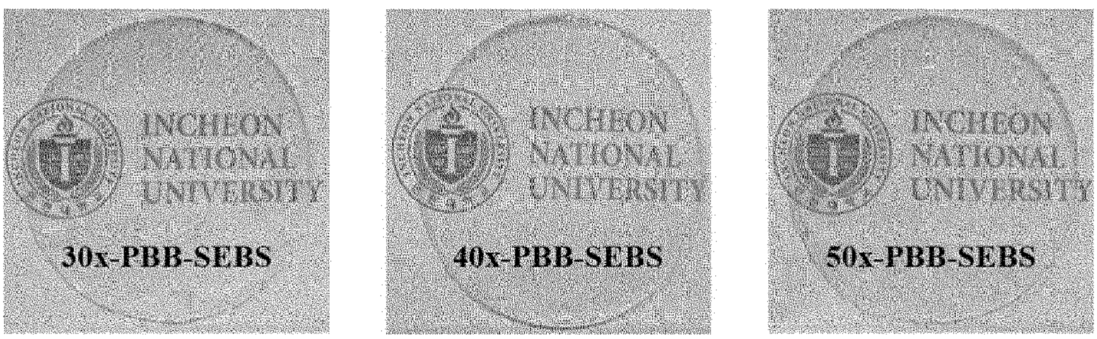

Fig. 10

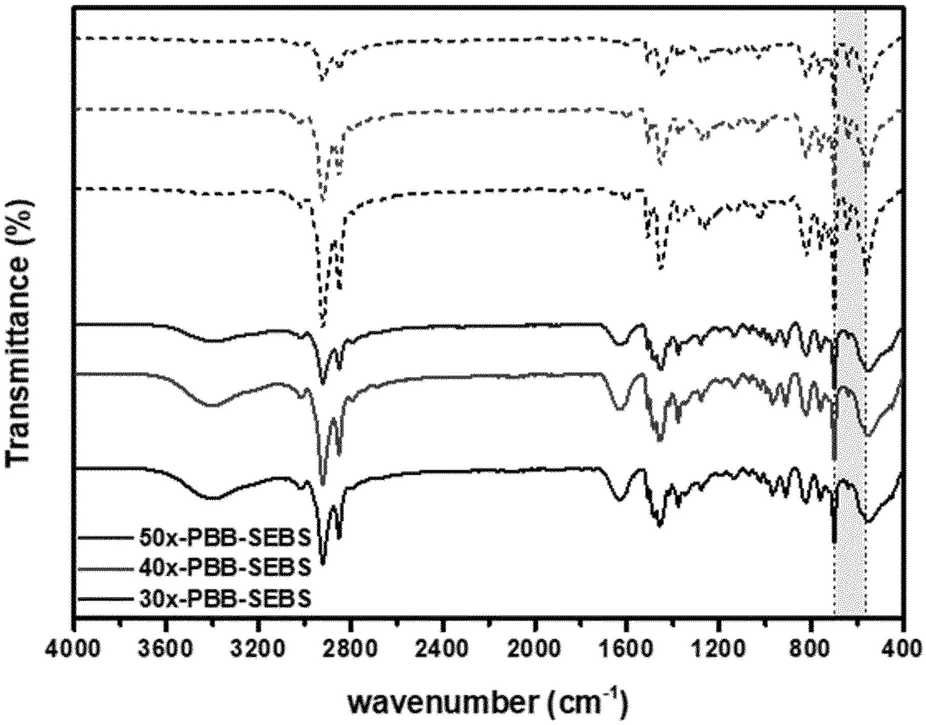
Transmittance (%)
50x-PBB-SEBS
40x-PBB-SEBS
30x-PBB-SEBS
4000
3600
3200
2800
2400
2000
1600
1200
800
400
wavenumber (cm-1)

【FIG. 11】

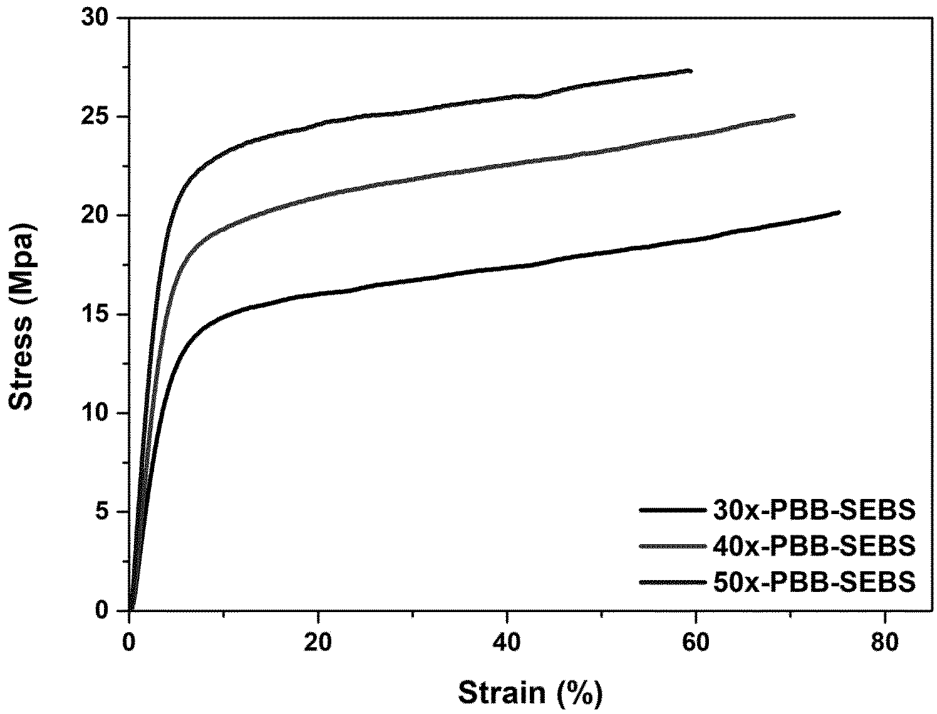
30
25
20
15
10
5
0
Stress (Mpa)
30x-PBB-SEBS
40x-PBB-SEBS
50x-PBB-SEBS
0
20
40
60
80
Strain (%)

【FIG. 12】

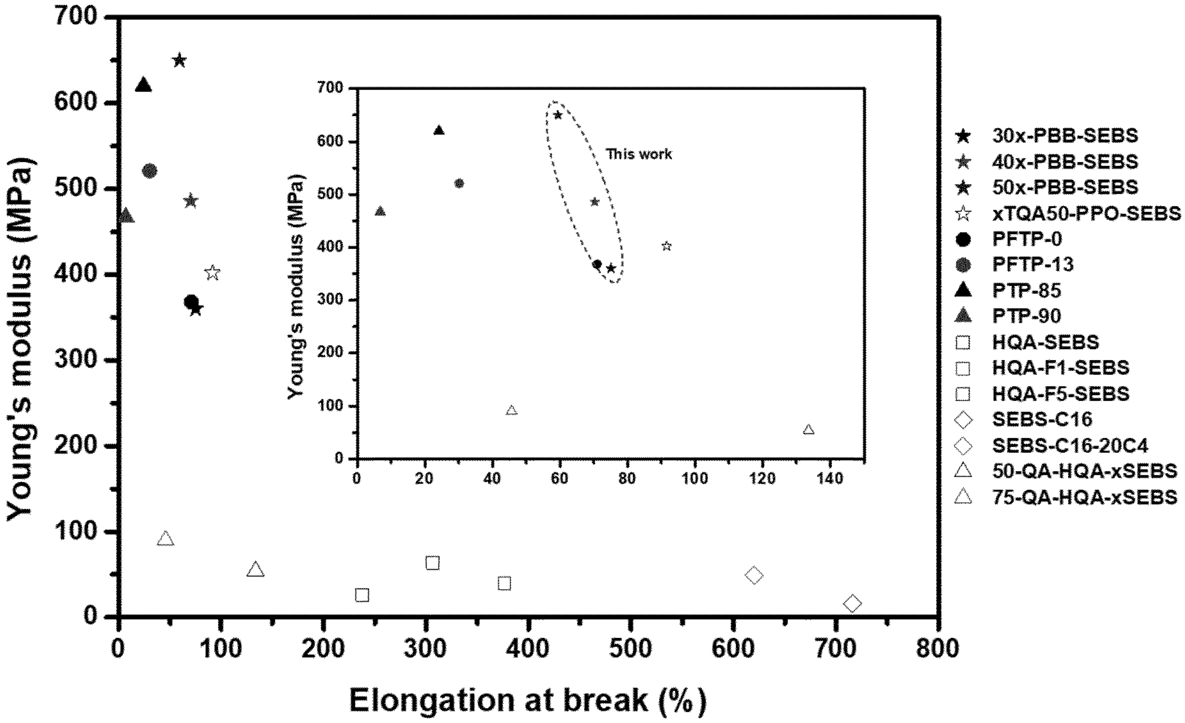

700
600
500
400
300
200
100
0
Young's modulus (MPa)
0
100
200
300
400
500
600
700
800
Elongation at break (%)
This work
Young's modulus (MPa)
0
20
40
60
80
100
120
140
30x-PBB-SEBS
40x-PBB-SEBS
50x-PBB-SEBS
xTQA50-PPO-SEBS
PFTP-0
PFTP-13
PTP-85
PTP-90
HQA-SEBS
HQA-F1-SEBS
HQA-F5-SEBS
SEBS-C16
SEBS-C16-20C4
50-QA-HQA-xSEBS
75-QA-HQA-xSEBS

Fig. 13

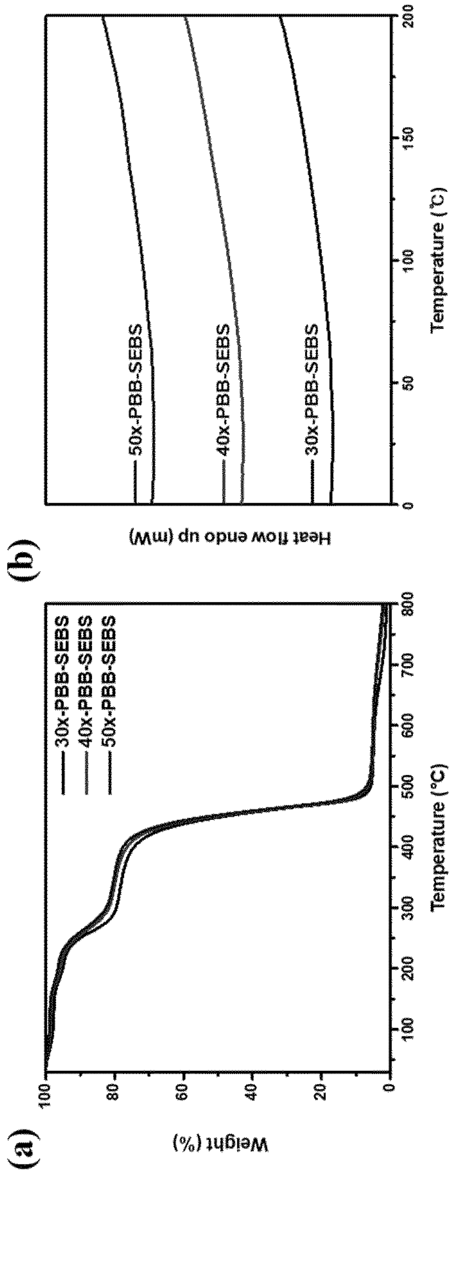
(a)
Weight (%)
Temperature (°C)
30x-PBB-SEBS
40x-PBB-SEBS
50x-PBB-SEBS
(b)
Heat flow endo up (mW)
Temperature (℃)
50x-PBB-SEBS
40x-PBB-SEBS
30x-PBB-SEBS

Fig. 14

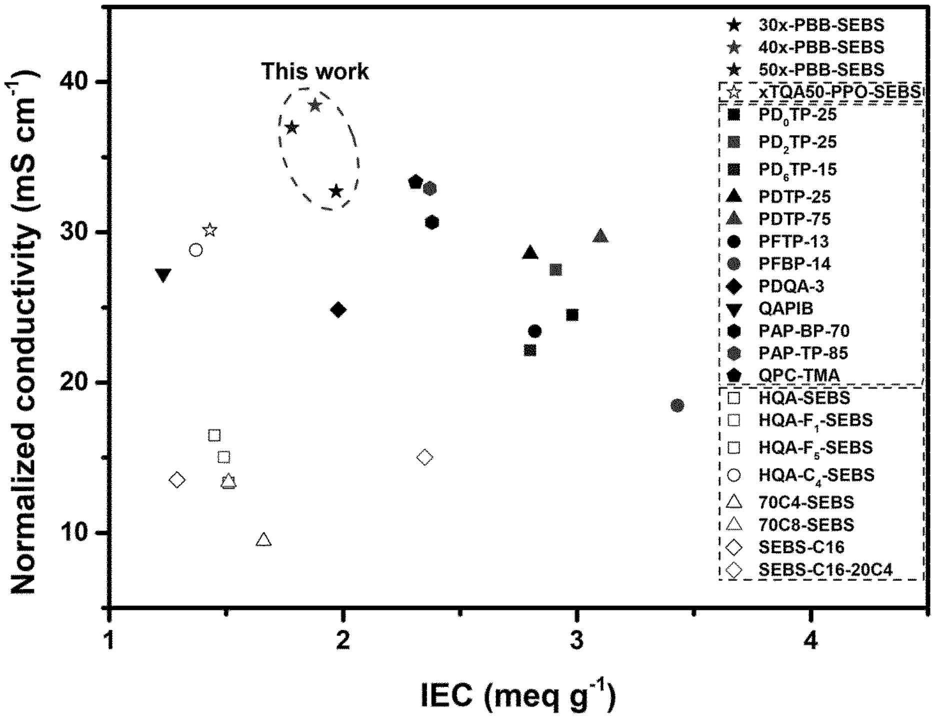
This work
Normalized conductivity (mS cm-1)
IEC (meq g-1)
30x-PBB-SEBS
40x-PBB-SEBS
50x-PBB-SEBS
xTQA50-PPO-SEBS
PD0TP-25
PD2TP-25
PD6TP-15
PDTP-25
PDTP-75
PFTP-13
PFBP-14
PDQA-3
QAPIB
PAP-BP-70
PAP-TP-85
QPC-TMA
HQA-SEBS
HQA-F1-SEBS
HQA-F5-SEBS
HQA-C4-SEBS
70C4-SEBS
70C8-SEBS
SEBS-C16
SEBS-C16-20C4

【FIG. 15】

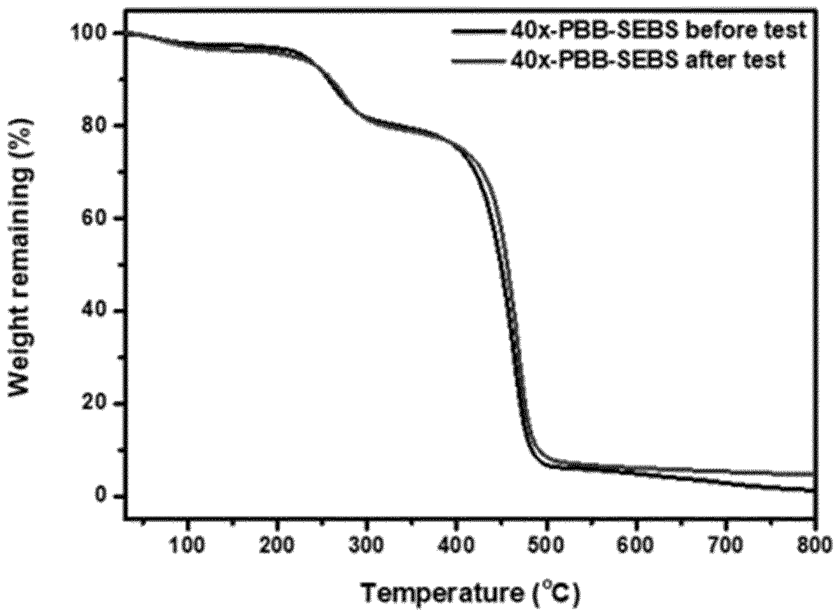
40x-PBB-SEBS before test
40x-PBB-SEBS after test
Weight remaining (%)
Temperature (°C)

【FIG. 16】

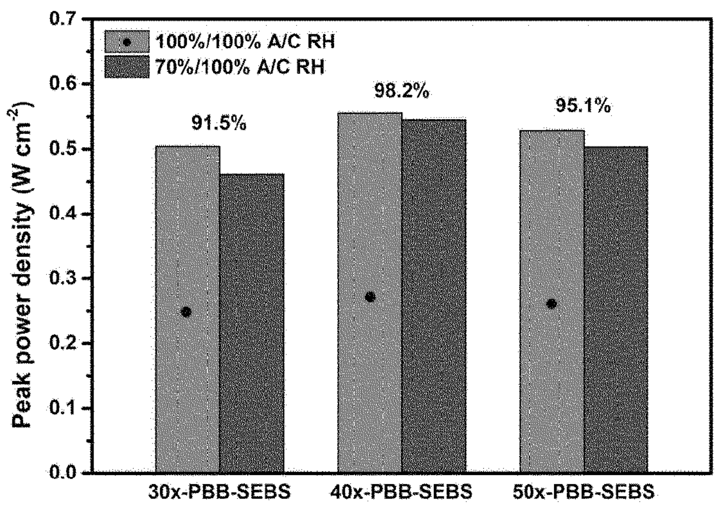
100%/100% A/C RH
70%/100% A/C RH
91.5%
98.2%
95.1%
Peak power density (W cm-2)
0.0
0.1
0.2
0.3
0.4
0.5
0.6
0.7
30x-PBB-SEBS
40x-PBB-SEBS
50x-PBB-SEBS

## INTERNATIONAL SEARCH REPORT

International application No.
**PCT/KR2023/004233**

**A. CLASSIFICATION OF SUBJECT MATTER**

**C08F 212/08**(2006.01)i; **C08F 212/14**(2006.01)i; **C08G 61/02**(2006.01)i; **C08J 5/22**(2006.01)i; **H01M 8/103**(2016.01)i; **H01M 8/1039**(2016.01)i; **C08F 236/10**(2006.01)i

According to International Patent Classification (IPC) or to both national classification and IPC

**B. FIELDS SEARCHED**

Minimum documentation searched (classification system followed by classification symbols)

C08F 212/08(2006.01); B01D 61/44(2006.01); B01D 67/00(2006.01); H01M 8/0239(2016.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 가교 공중합체(crosslinked copolymer), 스티렌-에틸렌-부틸렌-스틸렌(styrene-ethylene-butylene-styrene, SEBS), 비벤질 N-메틸 피페리딘(bibenzyl N-methyl piperidine), 고분자 막(polymer membrane), 음이온교환막(anion exchange membrane)

**C. DOCUMENTS CONSIDERED TO BE RELEVANT**

| Category* | Citation of document, with indication, where appropriate, of the relevant passages | Relevant to claim No. |
|---|---|---|
| Y | WANG, L. et al. Covalent cross-linked anion exchange membrane based on poly(biphenyl piperidine) and poly(styrene-b-(ethylene-co-butylene)-b-styrene): preparation and properties. Polymer-plastics technology and materials. 2021, vol. 60, no. 11, pp. 1-14. See abstract; pages 2, 4 and 8; and formula 4. | 1-3,10-12 |
| Y | JEON, J. Y. et al. Synthesis of aromatic anion exchange membranes by friedel-crafts bromoalkylation and cross-linking of polystyrene block copolymers. Macromolecules. 2019, vol. 52, no. 5, pp. A-I. See pages B and C; and formula 1. | 1-3,10-12 |
| A | SUNG, S. et al. Preparation of crosslinker-free anion exchange membranes with excellent physicochemical and electrochemical properties based on crosslinked PPO-SEBS. Journal of materials chemistry A. 2021, vol. 9, pp. 1062-1079. See entire document. | 1-3,10-12 |
| A | WO 2019-209959 A1 (RENSSELAER POLYTECHNIC INSTITUTE) 31 October 2019 (2019-10-31) See entire document. | 1-3,10-12 |

☑ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **17 July 2023** | **17 July 2023** |
| Name and mailing address of the ISA/KR<br>**Korean Intellectual Property Office**<br>**Government Complex-Daejeon Building 4, 189 Cheongsa-ro, Seo-gu, Daejeon 35208**<br>Facsimile No. **+82-42-481-8578** | Authorized officer<br><br>Telephone No. |

Form PCT/ISA/210 (second sheet) (July 2022)

**INTERNATIONAL SEARCH REPORT**

International application No.
**PCT/KR2023/004233**

**C. DOCUMENTS CONSIDERED TO BE RELEVANT**

| Category* | Citation of document, with indication, where appropriate, of the relevant passages | Relevant to claim No. |
|---|---|---|
| A | KR 10-2022-0088308 A (IUCF-HYU (INDUSTRY-UNIVERSITY COOPERATION FOUNDATION HANYANG UNIVERSITY)) 27 June 2022 (2022-06-27)<br>See entire document. | 1-3,10-12 |

Form PCT/ISA/210 (second sheet) (July 2022)

INTERNATIONAL SEARCH REPORT

International application No.
**PCT/KR2023/004233**

**Box No. II Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☑ Claims Nos.: **9**
because they relate to parts of the international application that do not comply with the prescribed requirements to such an extent that no meaningful international search can be carried out, specifically:

Claim 9 refers to a claim violating PCT Rule 6.4(a), and thus the meaning thereof is unclear.

3. ☑ Claims Nos.: **4-8, 13**
because they are dependent claims and are not drafted in accordance with the second and third sentences of Rule 6.4(a).

Form PCT/ISA/210 (continuation of first sheet) (July 2022)

**INTERNATIONAL SEARCH REPORT**
**Information on patent family members**

International application No.
**PCT/KR2023/004233**

| Patent document cited in search report | Publication date (day/month/year) | Patent family member(s) | Publication date (day/month/year) |
|---|---|---|---|
| WO 2019-209959 A1 | 31 October 2019 | BR 112020021926 A2 | 26 January 2021 |
| | | CN 112512668 A | 16 March 2021 |
| | | EP 3784369 A1 | 03 March 2021 |
| | | JP 2021-523978 A | 09 September 2021 |
| | | KR 10-2021-0019416 A | 22 February 2021 |
| | | US 2021-0108067 A1 | 15 April 2021 |
| KR 10-2022-0088308 A | 27 June 2022 | WO 2022-131665 A1 | 23 June 2022 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 1020220079130
- KR 1020230040300
- KR 102184530

### Non-patent literature cited in the description

- *Nat. Energy*, 2019, vol. 4, 392-398
- *J. Power Sources*, 2021, vol. 487, 229429
- *J. Mater. Chem. A. Mater.*, 2021, vol. 9, 327-337
- *Nat. Commun.*, 2021, vol. 12, 2367
- *J. Membr. Sci.*, 2021, vol. 621
- *J. Membr. Sci.*, 2022, vol. 642, 119966
- *J. Polym. Sci.*, 2020, vol. 58, 2181-2196
- *Int. J. Hydrogen Energy*, 2021, vol. 46, 36301-36313
- *J. Membr. Sci.*, 2020, vol. 599, 117829
- *Int. J. Hydrogen Energy*, 2020, vol. 45, 15658-15671
- *J. Membr. Sci.*, 2022, 120029
- *J. Mater. Chem. A.*, 2019, vol. 7, 6883-6893
- *J. Membr. Sci.*, 2021, vol. 638, 119685
- *Energy Environ. Sci.*, 2020, vol. 13, 3633-3645
- *Int. J. Hydrogen Energy*, 2021, vol. 46, 18524-18533
- *J. Membr. Sci.*, 2022, vol. 647, 120341
- *Angew. Chem.*, 2021, vol. 133, 7789-7797
- *Membranes*, 2020, vol. 10, 1-16